# EUROPÄISCHE PATENTSCHRIFT

(11) **EP 1 104 360 B1**
(45) Veröffentlichungstag und Bekanntmachung des Hinweises auf die Patenterteilung: **30.07.2003**
(21) Anmeldenummer: 00945620.3
(22) Anmeldetag: 08.06.2000
(51) Int. Cl.: B60K 41/14

(54) **SYSTEM ZUR EINSTELLUNG DER SPANNUNG DES UMSCHLINGUNGSTEILS EINES UMSCHLINGUNGSGETRIEBES**
SYSTEM FOR ADJUSTING THE TENSION OF THE WOUND PART OF A BELT DRIVE TRANSMISSION
SYSTEME POUR LE REGLAGE DE LA TENSION DE LA COURROIE D'UNE TRANSMISSION A VARIATION CONTINUE

(30) Priorität: 12.06.1999 DE 19926902
(43) Veröffentlichungstag der Anmeldung: 06.06.2001
(73) Patentinhaber: ROBERT BOSCH GMBH, 70442 Stuttgart (DE)
(72) Erfinder: RIES-MUELLER, Klaus, D-74906 Bad Rappenau (DE); DRESSLER, Norbert, D-75428 Illingen-Schutzingen (DE); LUH, Joachim, D-74321 Bietigheim-Bissigen (DE)
(86) Internationale Anmeldenummer: DE0001876
(87) Internationale Veröffentlichungsnummer: WO00076799

(56) Entgegenhaltungen:
- EP-A- 0 759 518
- DE-A- 19 548 722
- US-A- 5 218 541
- US-A- 5 243 881

## Beschreibung

### Stand der Technik

Die Erfindung betrifft ein System zur Einstellung der Spannung des Umschlingungsteils eines Umschlingungsgetriebes nach dem Oberbegriff des Anspruchs 1.

Solch ein System, das beispielsweise aus der EP,A1,0 451 887 bekannt ist, wird in der Figur 1 beschrieben. Auch diese Schrift betrifft die Einstellung der Spannung eines Umschlingungsmittels 1, im allgemeinen ein Band, in einem stufenlosen Umschlingungsgetriebe 2, bestehend aus dem Umschlingungsmittel 1, einer Antriebsscheibe 3 und einer Abtriebsscheibe 4, welches von einem Motor 11 angetrieben wird.

Zur Einstellung der Übersetzung des stufenlosen Umschlingungsgetriebes und der Spannung des Umschlingungsmittels 1 bestehen die Antriebsscheibe 3 und Abtriebsscheibe 4 aus je einer axial feststehenden 7 bzw. 8 und einer axial beweglichen Kegelscheibe 9 bzw. 10. Die Antriebsscheibe 3 wird auch als Primärscheibe und die Abtriebsscheibe 4 auch als Sekundärscheibe bezeichnet. Die Anpressung der axial beweglichen Kegelscheiben 9 bzw. 10 gegen das Umschlingungsmittel 1 erfolgt durch Aufbau eines hydraulischen Drucks in den Ölkammern 5 bzw. 6. Durch eine geeignete Wahl der Anpreßdrücke Pₚᵣᵢₘ und Pₛₑₖ in den Ölkammern 5 und 6 kann die gewünschte Übersetzung des stufenlosen Umschlingungsgetriebes und die erforderliche Spannung des Umschlingungsmittels 1 eingestellt werden. Für die Kraftübertragung vom Motor 11 zur Antriebsscheibe 3 kann z.B. ein Drehmomentenwandler 12 und ein Planetensatz 13 mit Kupplungen für Vorwärts- und Rückwärtsfahrt vorhanden sein. Der Motor 11 kann auch die Pumpe 14 des stufenlosen Umschlingungsgetriebes antreiben. Eine Getriebesteuerung 18 beinhaltet die elektrischen und hydraulischen Komponenten zur Ansteuerung des stufenlosen Umschlingungsgetriebes. Die Getriebesteuerung 18 enthält Mittel zur Einstellung des Drucks in der Ölkammer 6 oder aber in den Ölkammern 5 und 6.

In einer Ausführung der Getriebesteuerung 18 wird mit dem Druck Pₛₑₖ in der abtriebsseitigen Ölkammer 6 die Spannung des Umschlingungsmittels 1 eingestellt.

Die Spannung des Umschlingungsmittels 1 ist so einzustellen, dass der Wirkungsgrad des stufenlosen Umschlingungsgetriebes maximal ist. Es ist dabei einerseits zu verhindern, dass das Umschlingungsmittel 1 durch eine zu kleine Spannung durchrutscht und andererseits soll die Spannung des Umschlingungsmittels 1 nicht zu hoch sein, um hohe Verluste im stufenlosen Umschlingungsgetriebe zu vermeiden. Um beide Anforderungen in Einklang bringen zu können, muß das von der Antriebsscheibe 3 auf die Abtriebsscheibe 4 übertragene Drehmoment möglichst genau bekannt sein. Das zu übertragende Drehmoment an der Antriebsscheibe 3 wird dabei hauptsächlich von dem Drehmoment des Motors 11 und dem Drehmomentenverstärkungsfaktor des Drehmomentenwandlers 12 bestimmt.

In der EP,A1,0 451 887 wird ein Verfahren zur Einstellung des Drucks Pₛₑₖ in der abtriebsseitigen Ölkammer 6 beschrieben. Bei diesem Verfahren wird der Drehwinkel α_{Dk} der Drosselklappe 15 des Motors 11 mit einem Sensor 16 erfaßt. Weiterhin wird die Drehzahl Nₘₒₜ des Motors 11, die Drehzahl Nₚᵣᵢₘ der Primärscheibe 3 und die Drehzahl Nₛₑₖ der Sekundärscheibe 4 mit Drehzahlsensoren 19, 20 und 21 gemessen und als entsprechende Signale an die Getriebesteuerung 18 weitergeleitet. Die mit dem Sensor 16 gemessene Winkellage α_{Dk} der Drosselklappe, die Motordrehzahl Nₘₒₜ, die Primärdrehzahl Nₚᵣᵢₘ und die Sekundärdrehzahl Nₛₑₖ werden in der Getriebesteuerung 18 zur Einstellung der Spannung des Umschlingungsmittels 1 durch Einstellen des Drucks in der Ölkammer 6 verwendet.

Zur Einstellung der Spannung des Umschlingungsmittels 1 wird mit einem Kennfeld aus dem Drosselklappenwinkel und der Motordrehzahl das zu erwartende Motordrehmoment abgeschätzt. Das zu erwartende Motordrehmoment wird mit dem gebildeten Quotienten aus der Primärdrehzahl und der Motordrehzahl in einem Kennfeld in ein erwartetes Primärdrehmoment umgerechnet. Anschließend erfolgt die Berechnung des erforderlichen Drucks Pₛₑₖ in der abtriebsseitigen Ölkammer zur Einstellung der Spannung des Umschlingungselements 1.

Die Verwendung des Drosselklappenwinkels α_{Dk} zur Abschätzung des Motormoments hat den Nachteil, dass der Abgleich des Drosselklappenpotentiometers sehr genau erfolgen muß. Bereits eine kleine Abweichung des gemessenen Drosselklappenwinkels von dem tatsächlichen Drosselklappenwinkel kann bei obigem Verfahren zu einer erheblichen Abweichung zwischen dem erwarteten Motordrehmoment und dem tatsächlichen Motordrehmoment führen. Da es schwierig ist, zu garantieren, dass der Drosselklappenwinkel immer richtig gemessen wird, muß die Bandspannung mit einer höheren Sicherheitsreserve über dem erforderlichen Niveau gehalten werden, indem ein um den Reservedruck höherer Druck in der abtriebsseitigen Ölkammer eingestellt wird. Das führt zu höheren Verlusten im Getriebe und in der Pumpe. Darüber hinaus kann es zu Problemen bei der Abschätzung des Motormoments während dynamischer Fahrzuständen mit größeren zeitlichen Änderungen der Motordrehzahl kommen.

Die DE 195 48 722 A1 verbessert die obengenannte Einstellung der Bandspannung, indem beispielsweise ein im Motorsteuerungsgerät berechneter Momentenwert zur Einstellung der Bandspannung herangezogen wird. Ausführungen zur Ermittlung der Sicherheitsreserve sind hier nicht zu finden.

In heutigen Motorsteuerungssystemen ist meist eine Erkennung von Verbrennungsaussetzern eines oder mehrerer Zylinder des Fahrzeugmotors im Einsatz, die aus Schwankungen der Motordrehzahl einen Motorlaufunruhewert berechnet. Dieser wird mit applizierten Schwellwerten verglichen. Übersteigt die Motorlaufunruhe den Schwellwert, so wird ein Verbrennungsaussetzer erkannt. Hierzu soll auf die DE 41 38 765 A verwiesen werden. Probleme können dabei verschiedene Störgrößen auf dem Drehzahlsignal bereiten. Solche Störgrößen sind beispielsweise mechanische Fehler des Geberrades bei der Motordrehzahlerfassung, Füllungsunterschiede der einzelnen Zylinder (Unterschiede aufgrund des Verbrennungsprozesses) und Torsionsschwingungen. Zur genauen Aussetzererkennung werden diese Störeinflüsse im Normalbetrieb adaptiert, was in der DE 196 22 448 A und in der EP 0 733 890 A beschrieben ist. Das heißt, dass nach einer erfolgten Adaption Korrekturwerte zur Verfügung stehen, die für eine genaue Erfassung der Motordrehzahl berücksichtigt werden.

Weiterhin sind aus dem Stand der Technik, beispielsweise aus der Zeitschrift mot, Nr.15, 11.6.1998, Abstandsregelsysteme bekannt, die den Abstand eines Fahrzeugs zu einem vorausfahrenden Fahrzeugs erfassen. Dies geschieht im allgemeinen durch einen Radarsensor. Wird der Abstand zu gering, so sehen dieses Systeme auch fahrerunabhängige Bremseingriffe vor.

Die Aufgabe der vorliegenden Erfindung besteht in der Optimierung der Bandspannung, insbesondere in der Ermittlung der Sicherheitsreserve.

Diese Aufgabe wird durch die kennzeichnenden Merkmale des Anspruchs 1 gelöst.

### Vorteile der Erfindung

Wie schon erwähnt geht die Erfindung aus von einem System zur Einstellung der Spannung des Umschlingungsteils (z.B. des Bandes) eines, vorzugsweise in seiner Übersetzung stufenlos verstellbaren, einem Fahrzeugmotor nachgelagerten Umschlingungsgetriebes. Es sind erste Mittel zur Steuerung bzw. Regelung des Fahrzeugmotors und zweite Mitteln zur Steuerung bzw. Regelung des Umschlingungsgetriebes vorgesehen. Hierbei wird durch die ersten Mittel ein erstes, das Motormoment des Fahrzeugmotors repräsentierendes Signal ermittelt, das von den ersten Mitteln den zweiten Mitteln zugeführt wird. Durch die zweiten Mittel wird dann die Spannung abhängig von dem ersten Signal und einer Sicherheitsreserve eingestellt.

Der Kern der Erfindung besteht darin, dass diese Sicherheitsreserve nicht fest vorgegeben wird, sondern abhängig von verschiedenen Bedingungen bestimmt wird. Hierdurch gelangt man zu einer Verringerung des pauschalen Reservedrucks der Bandspannungsregelung und dadurch zu einem besseren Getriebewirkungsgrad und somit zu einem verringerten Kraftstoffverbrauch.

In einer ersten Ausführungsform der Erfindung ist vorgesehen, dass durch die ersten Mittel ein zweites Signal, das die Güte des ersten Signals repräsentiert, ermittelt wird. Dieses zweite Signal wird dann von den ersten Mitteln den zweiten Mitteln zugeführt, woraufhin die Sicherheitsreserve abhängig von dem zweiten Signal ermittelt wird. Das Umschlingungsteil beziehungsweise das Band wird somit vor übermäßigem Verschleiß in Situationen, bei denen das Motordrehmoment ungenau ist, geschützt.

In einer zweiten Ausführungsform der Erfindung sind Mittel vorgesehen, mittels der ein den Verschleiß und/oder die Alterung des Umschlingungsteils repräsentierender Alterungswert ermittelt wird. Die Sicherheitsreserve wird dann abhängig von dem Alterungswert ermittelt. Diese Ausführungsform berücksichtigt, dass der zur Schlupfvermeidung notwendige Anpreßdruck stark abhängig ist von dem Alter beziehungsweise dem Verschleiß des Umschlingungsteils. Das heißt, dass ein neues Band für die Übertragung des gleichen Motormoments weniger Anpreßdruck benötigt als ein bereits gealtertes/verschlissenes Band. Durch die Erfindung gelangt man zu einer optimierten Anpassung der Bandspannung an den Zustand des Bandes.

In einer dritten Ausführungsform der Erfindung sind dritte Mittel vorgesehen, mittels der ein drittes Signal, das die an den Fahrzeugrädern einzustellende Bremswirkung und/oder die Gierbewegung und/oder die Querbewegung des Fahrzeugs repräsentiert, ermittelt wird. Das dritte Signal wird dann von den dritten Mitteln den zweiten Mitteln zugeführt und die Sicherheitsreserve abhängig von dem dritten Signal ermittelt. Der Vorteil dieser Ausgestaltung besteht darin, dass abrupte, getriebeabtriebsseitig wirkende Drehmomentänderungen erkannt werden. Hierdurch kann rechtzeitig für eine Erhöhung der Bandspannung gesorgt werden.

In einer vierten Ausführungsform der Erfindung ist vorgesehen, dass den zweiten Mitteln ein die Drehzahl oder die Änderung der Drehzahl wenigstens eines Fahrzeugrades repräsentierendes viertes Signal zugeführt wird. Die Sicherheitsreserve wird dann abhängig von dem vierten Signal ermittelt. Ähnlich wie bei der dritten Ausführungsform besteht der Hintergrund dieser Ausgestaltung darin, dass aus der Dynamik der Fahrzeugräder auf abrupte, getriebeabtriebsseitig wirkende Drehmomentänderungen geschlossen werden kann. Zeigt die Raddynamik solche Drehmomentänderungen an, so kann vorteilhafterweise rechtzeitig für eine Erhöhung der Bandspannung gesorgt werden.

In einer fünften Ausführungsform der Erfindung ist vorgesehen, dass vierte Mittel zur eingangs erwähnten Abstandsregelung vorgesehen sind, die abhängig von dem erfaßten Abstand zu einem vorausfahrenden Fahrzeug ein Eingriffssignal, durch die ein Eingriff in die Bremsanlage des Fahrzeugs veranlaßt oder vorbereitet wird, ermitteln. Erfindungsgemäß wird die Sicherheitsreserve abhängig von dem Eingriffssignal ermittelt. Da auch durch Bremseingriffe zur Abstandsregelung abrupte, getriebeabtriebsseitig wirkende Drehmomentänderungen beziehungsweise Drehmomenteinkopplungen am Getriebe verursacht werden können, ist es vorteilhaft, diese bei der Ermittlung der Bandspannung zu berücksichtigen.

In einer sechsten Ausführungsform der Erfindung ist vorgesehen, dass fünfte Mittel vorgesehen sind, die wenigstens mittels eines Sensors einen Fahrbahnwert, der die Fahrbahnunebenheit der von dem Fahrzeug zu befahrenen Fahrbahn repräsentiert, ermitteln. Hierbei ist insbesondere an eine Radarsensor gedacht, dessen Ausgangssignale auch zur eingangs erwähnten Abstandsregelung herangezogen werden. Die Sicherheitsreserve wird abhängig von dem Fahrbahnwert ermittelt. Dieser Ausgestaltung legt der Gedanken zugrunde, dass auch durch eine unebene Fahrbahn abrupte Momentenänderungen am Getriebeausgang und damit am Band auftreten können. In diesem Fall muß die Bandspannung entsprechend erhöht werden, um Beschädigungen des Bandes vorzubeugen.

Zur ersten Ausgestaltung kann vorgesehen sein, dass das zweite Signal als Güte eine zumindest mögliche Schwankung des ersten Signals, also des Motormoments, repräsentiert.

Dabei ist vorteilhafterweise daran gedacht, dass das zweite Signal, also die Güte des Motormoments, abhängig von den Toleranzen wenigstens eines Sensors, dessen Ausgangssignal zur Steuerung bzw. Regelung des Fahrzeugmotors ausgewertet wird, ermittelt wird. Hierbei ist insbesondere vorgesehen ist, dass
- der Sensor zur direkten oder indirekten Erfassung der dem Fahrzeugmotor zugeführten Luftmasse,
- der Sensor zur Erfassung einer zur Steuerung bzw. Regelung des Fahrzeugmotors ausgewerteten Temperatur, und/oder
- der Sensor zur Erfassung von Eigenschaften des Abgases des Fahrzeugmotors, dessen Ausgangssignale insbesondere zur Erfassung des dem Fahrzeugmotor zugeführten Kraftstoff-Luft-Gemischs herangezogen werden,
dient.

Der Sensor zur direkten oder indirekten Erfassung der dem Fahrzeugmotor zugeführten Luftmasse kann beispielsweise als Heißfilmluftmassenmesser, als Saugrohrdrucksensor oder als Drosselklappenpotentiometer zur Messung der Winkellage der Drosselklappe ausgebildet sein.

In einer weiteren vorteilhaften Variante der ersten Ausgestaltung wird das zweite Signal abhängig von einer erkannten Fehlfunktion im Betrieb des Fahrzeugmotors ermittelt. Hierbei ist insbesondere vorgesehen, dass eine Fehlfunktion dann erkannt wird, wenn
- Verbrennungsaussetzer in einem oder mehreren der Zylinder des Fahrzeugmotors, insbesondere durch Auswertung der erfaßten Motordrehzahl, erfaßt werden und/oder
- eine Fehlfunktion eines Sensors, dessen Ausgangssignal zur Steuerung bzw. Regelung des Fahrzeugmotors ausgewertet wird, erkannt wird und/oder
- ein, insbesondere elektrischer, Notlauf der ersten Mittel vorliegt und/oder
- die Kraftstoffzufuhr zu einzelnen Zylinder des Fahrzeugmotors in Reaktion auf einen erkannten Fehler unterbrochen wird.

In einer nächsten vorteilhaften Variante der ersten Ausgestaltung wird das zweite Signal abhängig von der erfaßten Laufunruhe des Fahrzeugmotors ermittelt. Hierbei ist insbesondere vorgesehen, dass die Erfassung der Laufunruhe davon abhängig ist, ob
- mechanische Schwingungen, insbesondere Torsionsschwingungen, im Antriebsstrang des Fahrzeugs vorliegen, und/oder
- die Kraftstoffzufuhr zu einzelnen Zylinder des Fahrzeugmotors unterbrochen wird und/oder
- die ersten Mittel den Fahrzeugmotor derart steuern beziehungsweise regeln, dass Schwingungen im Antriebsstrang entgegengewirkt wird (Antiruckelfunktion, Lastschlagdämpfung), und/oder
- eine Umschaltung zwischen verschiedenen Betriebsarten des Fahrzeugmotors stattfindet und/oder
- erkannt wird, dass eine vorgebbare Fahrbahnqualität vorliegt (Schlechtwegerkennung), und/oder
- der Kraftstofftank fast leer ist.

Eine Umschaltung zwischen verschiedenen Betriebsarten des Fahrzeugmotors kann beispielsweise eine Umschaltung zwischen einem Homogen- und Schichtbetrieb des Motors bei Motoren mit einer Benzindirekteinspritzung sein.

Dabei kann vorgesehen sein, dass das zweite Signal abhängig von gespeicherten Adaptionswerten, die die Laufunruhe des Fahrzeugmotors repräsentieren, ermittelt wird, wobei die Adaptionswerte last- und/oder drehzahlabhängig gespeichert werden können.

In einer letzten vorteilhaften Variante der ersten Ausgestaltung wird das zweite Signal abhängig von Ungenauigkeiten, die bei der Ermittlung des ersten Signals auftreten, ermittelt. Hierbei kann vorgesehen sein,
- dass das zweite Signal abhängig von der Drehzahl des Fahrzeugmotors ermittelt werden, und/oder
- dass durch die ersten Mittel eine Adaption der Reib- beziehungsweise Verlustmomente, insbesondere im Leerlauf des Fahrzeugmotors, getätigt wird und das zweite Signal abhängig davon ermittelt wird, ob die Adaption abgeschlossen ist oder nicht.

Zur zweiten Ausgestaltung kann vorgesehen sein, dass der Alterungswert abhängig von der Betriebsdauer des Umschlingungsteils ermittelt wird. Hierbei ist insbesondere vorgesehen, dass der Alterungswert weiterhin abhängig von den während der Betriebsdauer vorliegenden Betriebsbedingungen wie Fahrverhalten des Fahrers, Betriebstemperatur und/oder Schlupf des Umschlingungsteils ermittelt wird.

Dabei kann weiterhin vorgesehen sein, dass der Alterungswert in den zweiten Mitteln ermittelt und dort nicht-flüchtig gespeichert wird.

Zur vierten Ausgestaltung kann vorgesehen sein, dass das vierte Signal den zweiten Mitteln von den dritten Mitteln zugeführt wird und die dritten Mittel als ein Antiblockierregelsystem und/oder ein Antriebsschlupfregelsystem und/oder ein Fahrstabilitätsregelsystem ausgebildet sind, mittels dem ein an den Fahrzeugrädern wirkendes Bremsmoment zur Erhöhung der Fahrstabilität eingestellt werden kann.

Zur sechsten Ausgestaltung kann vorgesehen sein, dass im Antriebsstrang des Fahrzeugs wenigstens eine Kupplung vorgesehen ist und die Kupplung abhängig von dem Fahrbahnwert und von erkannten Fehlerfällen, insbesondere Verbrennungsaussetzern, geöffnet wird. Hierbei ist insbesondere an eine Wandlerüberbrückungskupplung gedacht, durch die ein im Antriebsstrang vorgesehener Drehmomentenwandler überbrückt werden kann. Ein solches Öffnen der Wandlerkupplung kann auch bei den in der ersten Ausgestaltung beschriebenen Erkennung von Verbrennungsaussetzern vorteilhaft sein.

Vorteilhafterweise wird gemäß der Erfindung die Sicherheitsreserve folgendermaßen derart ermittelt:
- Bei der ersten Ausgestaltung wird die Spannung des Umschlingungsteils bei Vorliegen einer geringeren Güte des ersten Signals gegenüber der Einstellung der Spannung bei Vorliegen einer höheren Güte des ersten Signals erhöht.
- Bei der zweiten Ausgestaltung wird die Spannung des Umschlingungsteils bei Vorliegen eines höheren Verschleißes und/oder einer Alterung größeren Ausmaßes gegenüber der Einstellung der Spannung bei Vorliegen eines niedrigeren Verschleißes und/oder einer Alterung geringeren Ausmaßes erhöht.
- Bei der dritten Ausgestaltung wird die Spannung des Umschlingungsteils bei Vorliegen einer Bremswirkung und/oder einer Gier- und/oder Querbewegung größeren Ausmaßes gegenüber der Einstellung der Spannung bei Vorliegen einer Bremswirkung und/oder einer Gier- und/oder Querbewegung geringeren Ausmaßes erhöht.
- Bei der vierten Ausgestaltung wird die Spannung des Umschlingungsteils bei Vorliegen einer größeren Drehzahl oder die größeren Änderung der Drehzahl wenigstens eines Fahrzeugrades gegenüber der Einstellung der Spannung bei Vorliegen einer kleineren Drehzahl oder die kleineren Änderung der Drehzahl erhöht.
- Bei der fünften Ausgestaltung wird die Spannung des Umschlingungsteils bei Vorliegen eines durch die vierten Mittel (102) veranlaßten Bremseingriffs erhöht.
- Bei der sechsten Ausgestaltung wird die Spannung des Umschlingungsteils bei Vorliegen einer Fahrbahnunebenheit größeren Ausmaßes gegenüber der Einstellung der Spannung bei Vorliegen einer Fahrbahnunebenheit geringeren Ausmaßes erhöht.

Besonders vorteilhaft ist es, dass zunächst ein von dem ersten Signal, also von dem Motormoment, abhängiger Spannungswert ermittelt wird. Dieser Grundwert wird dann abhängig von der Sicherheitsreserve modifiziert beziehungsweise erhöht. Hierbei ist insbesondere vorgesehen, dass die Einstellung der Spannung hydraulisch geschieht und die Spannung durch die Vorgabe wenigstens eines Druckwertes eingestellt wird. Abhängig von dem ersten Signal wird ein Druckwert (Grundwert) ermittelt, der abhängig von der Sicherheitsreserve modifiziert beziehungsweise erhöht wird.

Weitere vorteilhafte Ausgestaltungen der Erfindung sind den Unteransprüchen zu entnehmen.

### Zeichnung

Die zumindest teilweise schon eingangs beschriebenen Figuren 1 und 2 zeigen als Blockschaltbild den Stand der Technik, während das in der Figur 2 dargestellte Übersichtsblockschaltbild die wesentlichen Elemente der Erfindung offenbart. Die Figuren 4, 5, 6, 7, 8 und 10 stellen die Ausführungsformen der Erfindung anhand von Blockschaltbildern detailliert dar. Die Figur 9 zeigt den Verlauf der Bandspannung abhängig vom Motormoment, während die Figur 11 prinzipiell die Erfassung der Fahrbahnunebenheiten veranschaulicht. Ein Ablaufdiagramm einer Ausführungsform ist der Figur 12 zu entnehmen.

### Ausführungsbeispiel

Die Erfindung soll im folgenden anhand verschiedener Ausführungsbeispiele dargestellt werden.

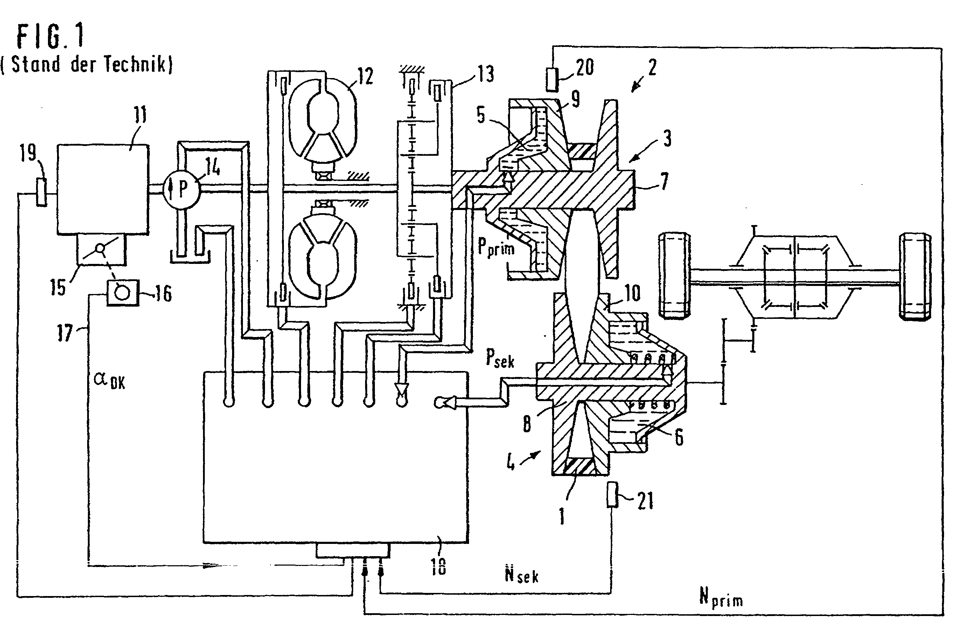

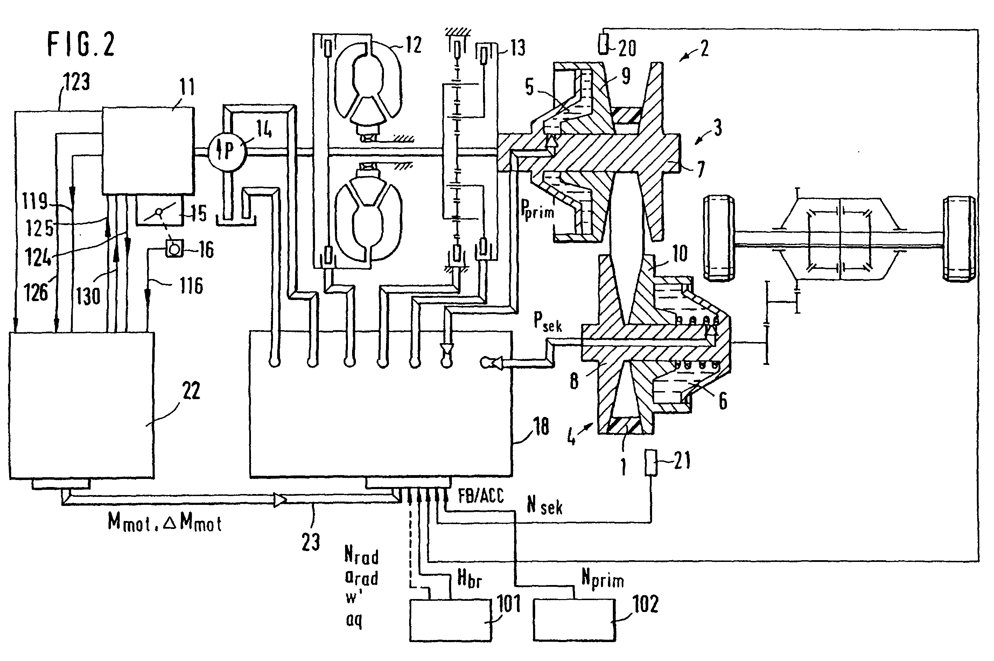

Hierzu zeigt zunächst die Figur 2 ein Übersichtsblockschaltbild, wobei die schon anhand der Figur 1 beschriebenen Blöcke mit den selben Bezugszeichen versehen sind.

Die Figur 2 zeigt ein stufenloses Umschlingungsgetriebe mit der Getriebesteuerung 18, die über die Datenleitung 23 mit der Motorsteuerung 22, welche den Verbrennungsmotor 11 steuert, verbunden ist. Durch die Datenverbindung 23 können ein oder mehrere Signale von der Motorsteuerung 22 zur Getriebesteuerung 18 übertragen werden. In der Figur sind als Daten das für dieses Erfindung wichtige Motormoment Mₘₒₜ und die Güte ΔMₘₒₜ beziehungsweise die mögliche Schwankung des Motormoments zu sehen.

Zur Steuerung des Motors 11 erhält die Motorsteuerung 22 über die Verbindungen 116, 119, 123, 124 und 126 verschiedene Signale über den Betriebszustand des Motors. Über die Verbindungen 125 und 130 werden die Stellglieder des Motors 11 angesteuert.

Weiterhin sind in der Figur 2 mit den Bezugszeichen 101 und 102 eine Bremssteuereinheit und eine Abstandssteuereinheit bezeichnet.

Die Bremssteuereinheit 101 ist dabei im allgemeinen als Antiblokkier-, Antriebsschlupf- und/oder Fahrstabilitätsregelsystem ausgebildet. Diese Systeme steuern die Fahrzeugbremsen derart, dass ein Blockieren und/oder ein Durchdrehen der Räder vermieden wird und/oder die Fahrstabilität erhöht wird. In der Bremssteuereinheit 101 liegt im allgemeinen das aktuell an den Rädern wirkende Bremsmoment M_{br}, die am Fahrzeug wirkende Gierrate ω' und/oder Querbeschleunigung, die Radbeschleunigung a_{rad} und/oder die Raddrehzahlen N_{rad} vor. Diese Größen werden einzeln oder in Kombination dem Getriebesteuergerät 18 zugeführt.

Die Abstandssteuereinheit 102 erfaßt den Abstand des Fahrzeugs zu einem Hindernis beziehungsweise zu vorausfahrenden Fahrzeugen. Abhängig von diesem Abstand, beispielsweise zur Erhöhung des Abstands, kann aktiv in die Fahrzeugbremsen eingegriffen werden. Dieser Eingriff wird durch das Signal ACC repräsentiert, das dem Getriebesteuergerät 18 zugeführt wird. Weiterhin kann die Fahrbahnbeschaffenheit FB durch die Abstandssteuereinheit 102 erfaßt und dem Getriebesteuergerät 18 zugeführt werden.

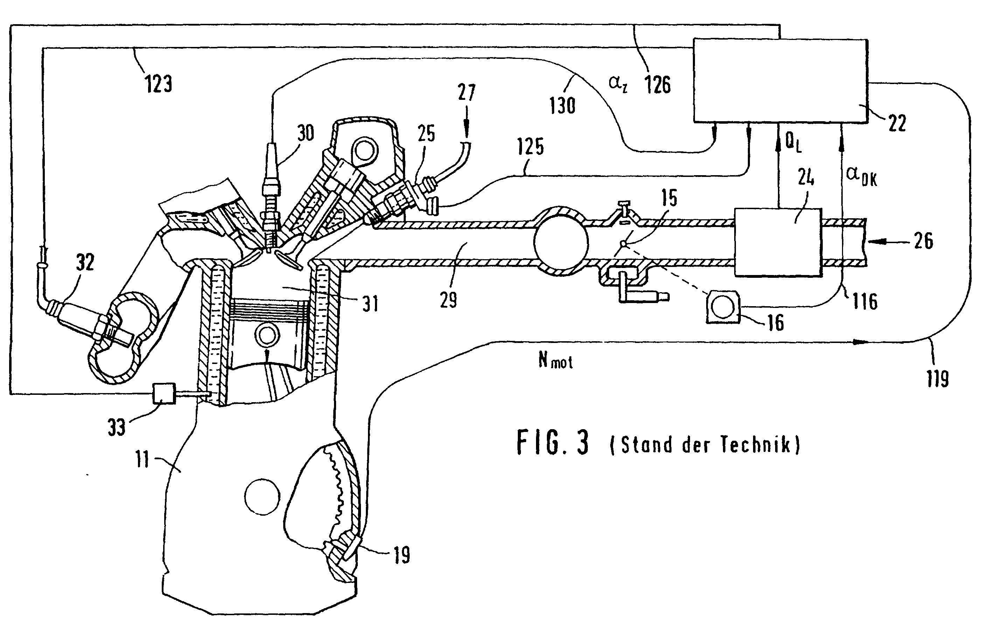

Die Figur 3 zeigt beispielhaft die Erfassung der Signale 116, 119, 123, 124 und 126 und die Ansteuerung des Verbrennungsmotors 11 mit den Signalen 125 und 130. Abgebildet ist ein Zylinder des Verbrennungsmotors 11. Mit dem Drehzahlsensor 19 wird das Signal 119, die Drehzahl Nₘₒₜ des Motors, gemessen. Durch einen Sensor 24 (Luftmassenmesser) wird die Masse Q_{L} der in das Saugrohr 29 angesaugten Luft 26 gemessen und als Signal 124 an die Motorsteuerung 22 weitergeleitet. Die Motorsteuerung 22 betätigt mit dem Signal 125 eine Einrichtung 25 zur Zumessung des Kraftstoffs 27. Dieser kann dabei z.B. in das Saugrohr 29 gespritzt werden. Die Einrichtung 25 kann z.B. ein Kraftstoffeinspritzventil sein. Weiterhin erfolgt von der Motorsteuerung 22 aus mit dem Signal 130 die Ansteuerung α_{z} der Zündkerzen 30 zur Zündung des Kraftstoff-Luft-Gemischs im Inneren des Brennraumes 31 des Verbrennungsmotors 11. Durch die im Abgastrakt angebrachte Lamda-Sonde 32 wird als Signal 123 die Zusammensetzung des Abgases erfaßt. Weiterhin wird mittels des Temperatursensors 33 die Motor- beziehungsweise Kühlwassertemperatur gemessen und als Signal 126 dem Motorsteuerungsgerät 22 zugeführt.

Die Motorsteuerung 22 liefert unter anderem Signale 125 und 130 zur Ansteuerung des Verbrennungsmotors 11, die u.a. abhängig von dem Signal 124, das die Masse der vom Verbrennungsmotors 11 angesaugten Luft angibt, ist. Mit einem Signal 119 wird die Drehzahl Nₘₒₜ des Verbrennungsmotors und mit dem Signal 116 die Winkellage α_{Dk} der Drosselklappe der Motorsteuerung 22 zugeleitet.

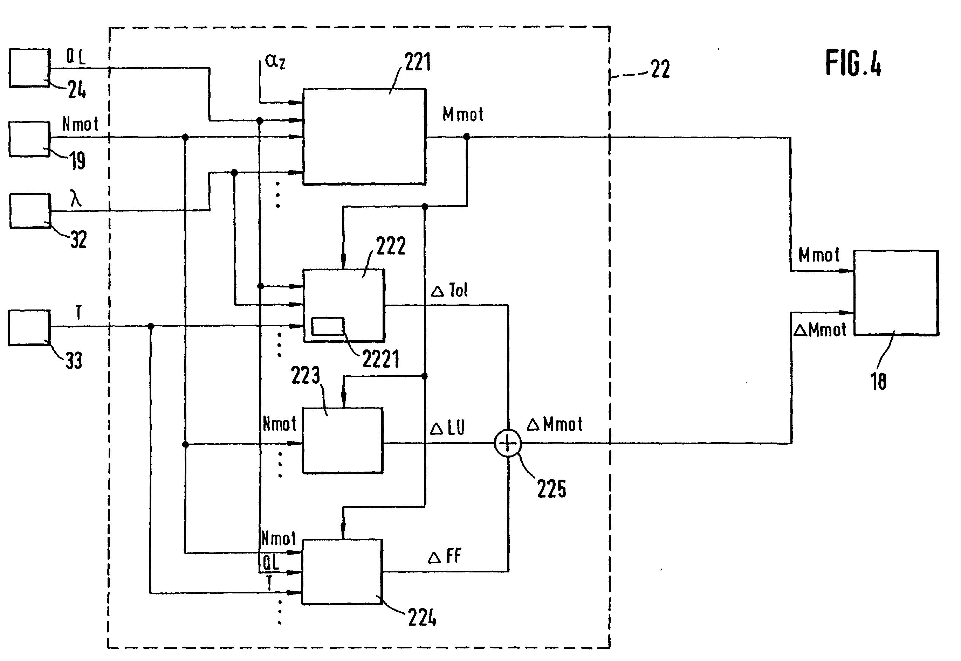

Die Motorsteuerung 22 ermittelt das zu erwartende Motorausgangsdrehmoment und überträgt das Ergebnis als Signal Mₘₒₜ über die Verbindung 23 zur Getriebesteuerung 18. Verfahren zur Berechnung des zu erwartenden Drehmoments aus den Signalen 119 (Nₘₒₜ), 124 (angesaugte Luft Q_{L}), 116 (α_{DK}), 125 (Einspritzmenge) und 130 (Zündzeitpunkt α_{z}) sind aus dem Stand der Technik bekannt. Die Ermittlung des Motormoments ist in der Figur 4 im Motorsteuerungsgerät 22 mit dem Block 221 dargestellt.

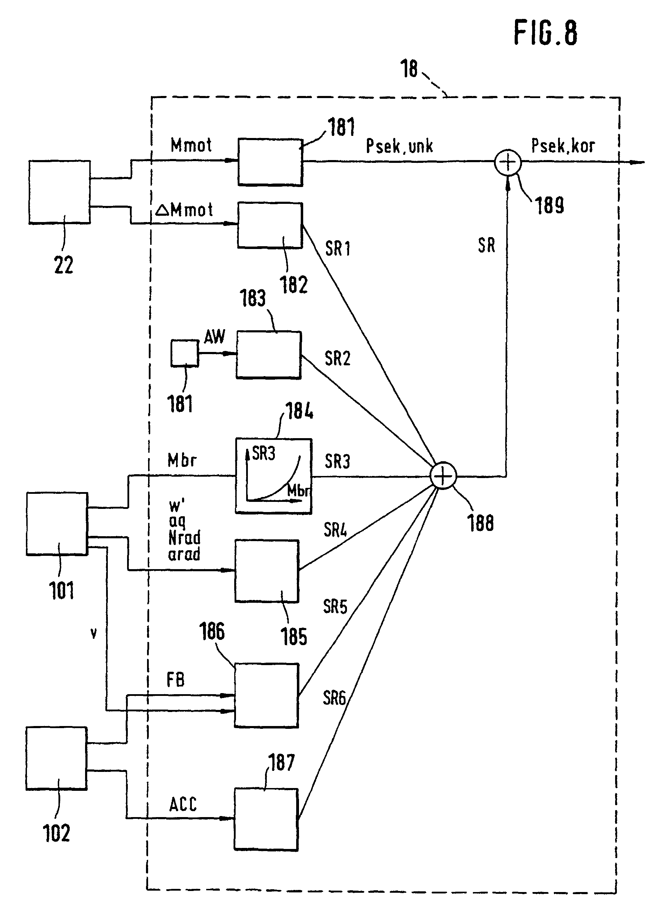

Wie in der Figur 8 gezeigt wird, wird die Spannung des Umschlingungsteils in der Getriebesteuerungseinheit 18 im wesentlichen abhängig von dem erwarteten oder momentan eingestellten Motorausgangsdrehmoment (Signal Mₘₒₜ) durch die Einstellung des Sekundärdrucks vorgegeben. Dies geschieht in der Figur 8 mit dem Block 181, durch den zunächst ein vorläufiger Sollwert P_{sek,unk} für den Sekundärdruck abhängig von Mₘₒₜ gebildet wird. Daneben werden, wie noch im folgenden beschrieben wird, verschiedene Anteile SR1 bis SR6 ermittelt, die durch die Addition 188 zu einem Sicherheitsreservewert SR zusammengefaßt werden. Der Wert SR wird nun durch die Addition 189 mit dem Sollwert P_{sek,unk} für den Sekundärdruck verknüpft zu dem Wert P_{sek,kor}, der den tatsächlich einzustellenden Sekundärdruck und damit die tatsächlich einzustellende Bandspannung vorgibt. Wesentlich für die vorliegende Erfindung ist die Ermittlung der Sicherheitsreserve SR.

Die einzelnen Einflußgrößen zur Ermittlung Sicherheitsreserve SR und damit der Einstellung der Spannung des Umschlingungsteils 1 werden im folgenden aufgeführt:

### 1. Ermittlung der Sicherheitsreserve abhängig von motorseitigen Einflüssen:

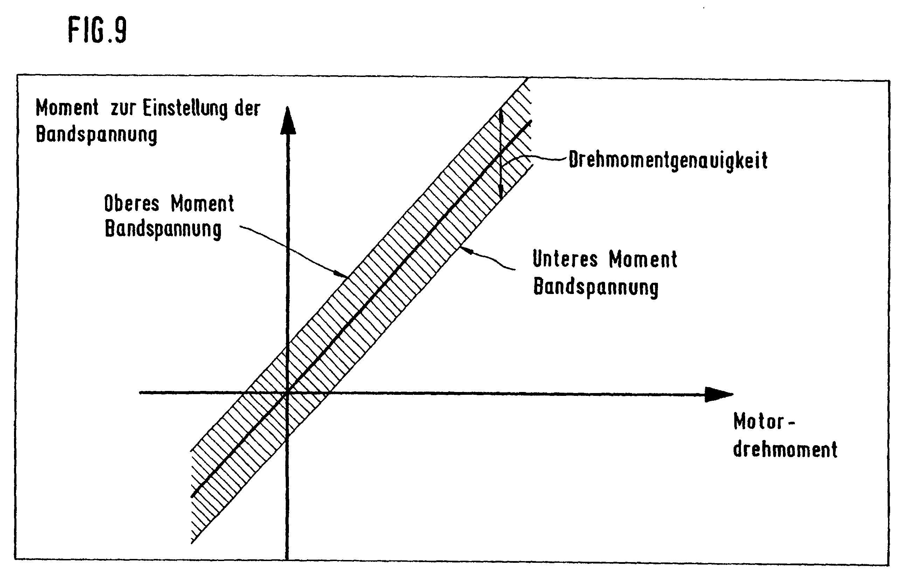

Der Kern dieses Teils der Erfindung besteht darin abzuschätzen, wie verläßlich und genau das, im allgemeinen in der Motorsteuerung 22, ermittelte Motorausgangsmoment Mₘₒₜ ist. Abhängig von dieser "Güte" ΔMₘₒₜ des Motormoments wird dann erfindungsgemäß die Sicherheitsreserve SR ermittelt. Die Getriebesteuerung 18 kann mit dem Signal ΔMₘₒₜ die Bandspannung beziehungsweise den Sekundärdruck so einstellen, dass das Band 1 innerhalb eines Drehmomentbandes nicht durchrutscht. Das soll die Figur 9 verdeutlichen. Das Getriebesteuergerät 18 leitet aus den Signalen "Motordrehmoment Mₘₒₜ" und "Drehmomentgenauigkeit ΔMₘₒₜ" ein unteres und ein oberes Momentensignal zur Einstellung der Bandspannung ab.

Die Verläßlichkeit und Genauigkeit des erwartenden oder momentan eingestellten Motorausgangsdrehmoment (Signal Mₘₒₜ) hängt im wesentlichen von folgenden Faktoren ab:
- Toleranzen der Sensoren, deren Ausgangssignale zur Steuerung bzw. Regelung des Fahrzeugmotors 11 ausgewertet werden. Hierbei sind insbesondere die Toleranzen der Sensoren wichtig, deren Ausgangssignale zur Ermittlung des Motormoments Mₘₒₜ herangezogen werden. Hierzu wird im Block 222 der Wert ΔTol gebildet.
- Fehlfunktionen des Fahrzeugmotors 11. Hierzu wird im Block 224 der Wert ΔFF gebildet.
- Laufunruhe des Fahrzeugmotors 11. Hierzu wird im Block 223 der Wert ΔLU gebildet.
- Ungenauigkeiten, die bei der Ermittlung des Motormoments Mₘₒₜ auftreten. Dies wird durch den im Block 222 gebildeten Wert ΔTol berücksichtigt.

Wie in der Figur dargestellt, werden abhängig von diesen Faktoren ΔTol, ΔLU und ΔFF in der Additionseinheit 225 der Motorsteuerung 22 die Güte ΔMₘₒₜ des Motormoments ermittelt und der Getriebesteuerung 18 zugeführt. Wie noch beschrieben wird, trägt das Signal ΔMₘₒₜ im Getriebsteuerungsgerät 18 zur Bildung der Bandspannung in dem Sinne bei, dass mit steigendem ΔMₘₒₜ die Sicherheitsreserve für die Bandspannung erhöht wird.

### 1a) Sensortoleranzen und Ungenauigkeiten (Block 222/Fig. 4):

Die Bestimmung (Block 221 in der Figur 4) des Motordrehmoments Mₘₒₜ im Motorsteuerungsgerät 22 unterliegt verschiedenen Toleranzen und Unsicherheiten. Das Motordrehmoment Mₘₒₜ wird beispielsweise aus der gemessenen Luftmasse Q_{L} berechnet. Der Luftmassenmesser 24 hat jedoch Toleranzen. Weiterhin wird beispielsweise bei heute in Serie befindlichen Motorsteuerungssystemen das Reibmoment des Motors 11 im Leerlauf adaptiert, das heißt im Sinne eines Lernens angepaßt. Dies bedeutet, dass durch die Motorsteuerung 22 eine Adaption der Reib- beziehungsweise Verlustmomente getätigt wird. Dies geschieht , insbesondere im Leerlauf des Fahrzeugmotors. Diese Adaption bedeutet jedoch, dass nach dem Einbau eines neuen Motorsteuerungsgerätes 22 das Drehmomentensignal Mₘₒₜ zunächst ungenauer ist als nach der erfolgten Adaption.

So kann beispielsweise in dem Ablauf des Motorsteuerungsgerätes ein Flag vorgesehen sein, welches angibt, ob das Motordrehmoment genau oder ungenau ist. Diese Information ist jedoch zu grob.

Dieses Problem wird erfindungsgemäß dadurch gelöst, dass in der Motorsteuerung 22 im Block 222 ein Signal ΔTol ermittelt wird, das unter Berücksichtigung der Ungenauigkeiten und Toleranzen die Güte des Motordrehmoments Mₘₒₜ angibt.

Durch die Addition 225 wird das Signal ΔTol dann weiteren, noch zu beschreibenden Anteilen überlagert und als Güte beziehungsweise "Momentenungenauigkeit" ΔMₘₒₜ an die Getriebesteuerung 18 geliefert.

Beispielsweise kann die Motorsteuerung 22 im Block 222 in Betriebsbereichen, in denen das Motormoment Mₘₒₜ erfahrungsgemäß ungenau ist, das Signal ΔTol und damit die Momentenungenauigkeit höher wählen als in Situationen, in denen die Genauigkeit des Motormoments größer ist.

Weiterhin könnte zu Beginn der schon erwähnten Reibmomentenadaption das Signal ΔTol groß sein. Nach Erkennen des Endes der Adaption kann das Signal ΔMₘₒₜ wieder kleiner werden.

Die Momententoleranz beziehungsweise Ungenauigkeit ΔTol besteht im wesentlichen aus betriebspunktabhängigen prozentualen Fehlern (beispielsweise durch die Toleranzen bei der Erfassung der angesaugten Luft Q_{L}) und aus absoluten, nicht betriebspunktabhängigen Fehlern (beispielsweise die erwähnte nicht durchgeführte Adaption des Reibmoments).

Diese einzelnen Anteile der Toleranzen und Ungenauigkeiten werden im Block 222 berechnet. Hierzu werden dem Block 222 die Ausgangssignale der wichtigsten Sensoren, auf deren Ausgangssignale die Bestimmung von Mₘₒₜ beruht, zugeführt. Als solche Sensoren sind in der Figur 4 beispielhaft der Luftmassenmesser 24, die Lambda-Sonde 32, der Motordrehzahlsensor 19 und der Motortemperatursensor 33 aufgeführt.

Zur Speicherung der Daten zur Bestimmung der absoluten und relativen Toleranzen und Ungenauigkeiten ist im Block 222 ein Speicher 2221 vorgesehen.

Die Getriebesteuerung 18 kann mit dem resultierenden Signal ΔMₘₒₜ den Sekundärdruck Pₛₑₖ und damit die Bandspannung so einstellen, dass das Band 1 innerhalb einen Drehmomentbandes nicht durchrutscht. Das wird anhand der schon beschriebenen Figur 9 gezeigt.

Durch die Berücksichtigung der in diesem Abschnitt beschriebenen Sensortoleranzen und Ungenauigkeiten erlangt man einen Schutz des Bandes 1 vor Verschleiß in Situationen, bei denen das Motordrehmoment Mₘₒₜ ungenau ist.

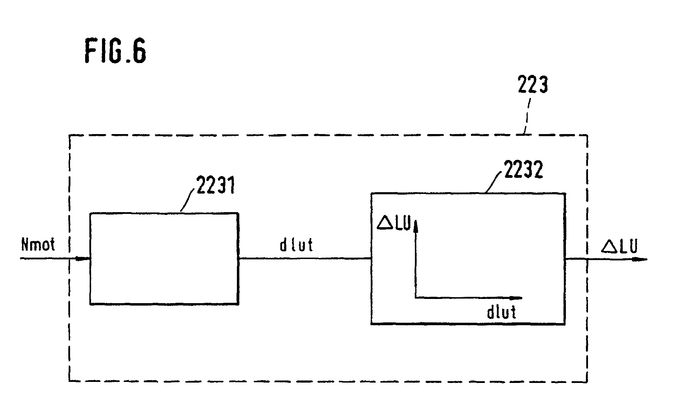

### 1b) Laufunruhe des Fahrzeugmotors (Block 223/Fig. 4 und 6):

In diesem Abschnitt wird beschrieben, wie die Laufunruhe des Fahrzeugmotors 11 berücksichtigt wird. Durch eine erhöhte Laufunruhe kann es zu abrupten, motorseitigen (getriebeeingangsseitigen) Drehmomentänderungen kommen. Aus diesem Grund muß die Bandspannung rechtzeitig erhöht werden.

Als mögliche Ursachen für eine erhöhte Laufunruhe kommen in Betracht:
- Starke Torsionsschwingungen im Antriebsstrang des Fahrzeugs.
- Zylinderabschaltungen. Hierbei wird bei Vorliegen bestimmter Betriebszustände, unter anderem aus Energiespargründen, bei Motoren mit vielen Zylindern ein Teil, beispielsweise die Hälfte, der Zylinder abgeschaltet.
- Starke Zündwinkeländerungen oder Einspritzzeitänderungen (bei Diesel- oder Benzindirekteinspritzung), beispielsweise während eines Eingriffs zum Entgegenwirken von Ruckeln im Antriebsstrang (Antiruckeleingriff, Lastschlagdämpfung).
- Fahren bei fast leerem Kraftstofftank.
- Eine Umschaltung zwischen verschiedenen Betriebsarten des Fahrzeugmotors. So ist es beispielsweise bei Motoren mit einer Benzindirekteinspritzung bekannt, je nach Betriebsbedingung zwischen einem sogenannten Homogen- und Schichtbetrieb umzuschalten.
- Fahren über eine Schlechtwegstrecke, das heißt über eine Fahrbahn minderer Qualität. In diesem Beschreibungsteil wird dabei die Laufunruhe als Auswirkung des Befahrens einer Schlechtwegstrecke betrachtet. Im einem folgenden Abschnitt dieser Anmeldung wird beschrieben, wie durch die Auswertung anderer, nicht direkt mit der Motorsteuerung zusammenhängender Größen ein Signal FB ermittelt wird, das die Fahrbahnqualität repräsentiert.

Die Ermittlung der Laufunruhe an sich ist beispielsweise aus dem eingangs erwähnten Stand der Technik bekannt und in modernen Motorsteuerungsgeräten implementiert. In der Figur 4 ist hierzu ein Block 223 im Motorsteuerungsgerät 22 eingezeichnet, der anhand der Figur 6 näher erläutert werden soll.

Dem Block 223 wird die Motordrehzahl Nₘₒₜ zugeführt, die im Block 2231 zu einem Signal dlut verarbeitet wird, das die Laufunruhe repräsentiert. Im Block 2231 ist hierzu ein entsprechender Algorithmus implementiert. Im Block 2232 ist ein Kennfeld gespeichert, das unterschiedlichen Laufunruhewerten dlut verschieden Werte ΔLU zuordnet. Wie noch später beschrieben wird, tragen die Werte ΔLU über die Addition 225 im Getriebsteuerungsgerät 18 zur Bildung der Bandspannung in dem Sinne bei, dass mit steigender Laufunruhe die Bandspannung erhöht wird.

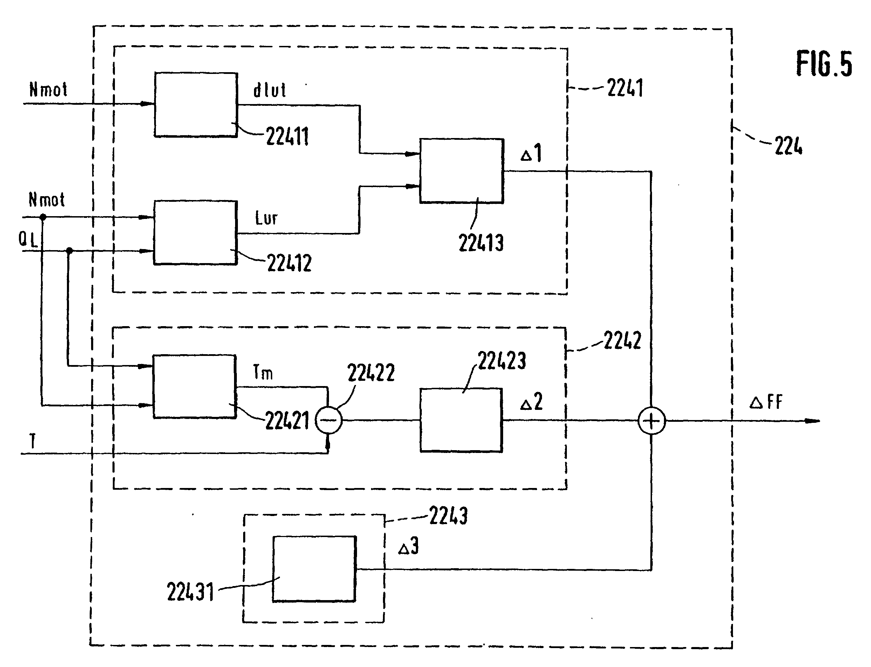

### 1c) Fehlfunktion des Fahrzeugmotors (Block 224/Fig. 4 und 5):

In diesem Abschnitt wird beschrieben, wie Fehlfunktionen des Fahrzeugmotors 11 berücksichtigt werden. Durch solche Fehlfunktionen kann es zu abrupten, motorseitigen Drehmomentänderungen kommen. Aus diesem Grund muß die Bandspannung rechtzeitig erhöht werden.

Als mögliche Ursachen für die solche Fehlfunktionen kommen in Betracht:
- Verbrennungsaussetzer, das heißt Störungen bei den einzelnen Verbrennungsvorgängen im Verbrennungsmotor 11.
- Defekte von Sensoren, deren Ausgangssignale zur Bestimmung des Motormoments Mₘₒₜ herangezogen werden.
- Zylinderabschaltung als Folge von verschiedenen Fehlerfällen, wie beispielsweise erkannten Verbrennungsaussetzern, defekten Einspritzventilen und defektem Zündsystem.
- Ein elektrischer Notbetrieb der Motorsteuerungseinheit 22.

Diese möglichen Ursachen werden im Block 224 der Figur 4 ermittelt. Dieser Block 224 wird nun anhand der Figur 5 näher beschrieben.

### Zur Ermittlung von Verbrennungsaussetzern (Block 2241) :

In modernen Motorsteuerungssystemen ist standardmäßig eine Erkennung von Verbrennungsaussetzern implementiert, die aus Schwankungen der Motordrehzahl Nₘₒₜ im Block 22411 den schon erwähnten Motorlaufunruhewert dlut berechnet. Dieser Motorlaufunruhewert dlut wird im Block 22413 mit einem angepaßten (applizierten) Schwellenwert Lur verglichen. Übersteigt die Motorlaufunruhe dlut den Schwellwert Lur, so wird ein Aussetzer erkannt und der Wert Δ1 gebildet. Die Schwelle Lur wird im Block 22412 abhängig von der Motordrehzahl Nₘₒₜ und der Luftmasse Q_{L} ermittelt. Hierzu soll beispielhaft auf den eingangs erwähnten Stand der Technik verwiesen werden. Der Wert Δ1 kann fest vorgegeben sein.

### Zur Ermittlung von Sensordefekten (Block 2242) :

Hier geht es darum, mögliche Defekte von Sensoren, deren Ausgangssignale zur Bestimmung des Motormoments Mₘₒₜ herangezogen werden, zu berücksichtigen. So führt beispielsweise ein Ausfall des Luftmassenmessers 24, der als bekannter Heißfilmluftmassenmesser ausgebildet sein kann, zu einem ungenauen Momentensignal Mₘₒₜ.

Im Block 2242 der Figur 5 ist hierzu beispielhaft die Überwachung des Motortemperatursensors 33 dargestellt. Hierzu wird im Block 22421 abhängig von der Motordrehzahl Nₘₒₜ und der Luftmasse Q_{L} mittels eines gespeicherten Temperaturmodells eine Modelltemperatur Tm ermittelt und im Punkt 22422 von dem gemessenen Temperaturwert T subtrahiert. Wird im Block 22423 festgestellt, dass die Differenz einen Schwellenwert übersteigt, so läßt dies auf einen defekten Temperatursensor 33 schließen. In diesem Fall wird ein Wert Δ2 gebildet, der fest vorgegeben sein kann.

### Weiteres (Block 2243):

Befindet sich die Motorsteuerung im elektrischen Notlauf und/oder findet eine Zylinderabschaltung (Abschalten der Kraftstoffzufuhr zu einzelnen Zylinder des Fahrzeugmotors) als Folge von verschiedenen Fehlerfällen statt, so wird im Block 22431 ein Wert Δ3 gebildet, der fest vorgegeben sein kann.

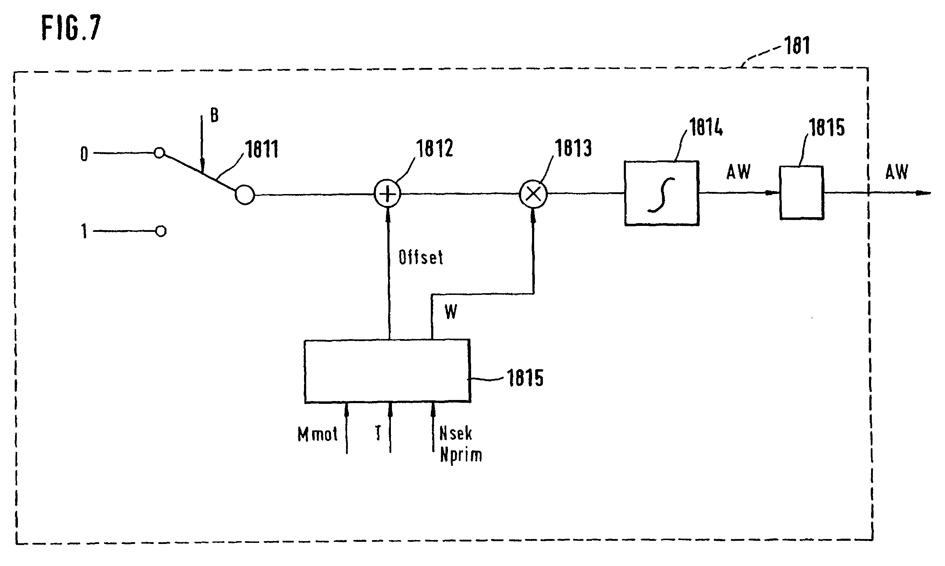

### 2. Ermittlung der Sicherheitsreserve abhängig von der Alterung und/oder des Verschleißes des Umschlingungsteils (Fig. 7):

Wie schon eingangs erwähnt sollte die Einstellung des Bandanpreßdruckes ein Optimum zwischen minimalen Druckverlusten einerseits und dem zu vermeidenden Bandschlupf andererseits finden. Der zur Schlupfvermeidung notwendige Anpreßdruck ist dabei stark abhängig von dem Alter beziehungsweise dem Verschleiß des Bandes 1. Das heißt, dass ein neues Band 1 für die Übertragung des gleichen Motormoments weniger Anpreßdruck benötigt als ein bereits gealtertes/verschlissenes Band.

Um verschiedene Alterungs- beziehungsweise Verschleißstufen eines Bandes zu berücksichtigen, kann im Betrieb eine gewisse fest vorgegebene Druckreserve eingestellt werden. Das heißt, dass bei einen neuen Band mit einem nicht zwingend notwendigen zusätzlichen Druck gefahren wird.

Der Kern dieses Teils der Erfindung besteht darin, die Alterung beziehungsweise den Verschleiß des Bandes abzuschätzen und abhangig davon die Sicherheitsreserve für die Bandspannung zu ermitteln.

Hierzu wird die in der Figur 7 dargestellte Schaltungsanordnung durch das Signal B beziehungsweise den Schalter 1811 immer dann an Spannung (Stellung "1") gelegt, wenn das Fahrzeug und damit das Getriebe in Betrieb ist. Ansonsten nimmt der Schalter 181 die spannungslose Stellung "0" ein. Durch die Integriereinheit 1814 wird die am Block anliegende Spannung integriert zu dem Alterungswert AW. Läßt man zunächst die Addition 1812 und Multiplikation 1813 außer Betracht, so ist der Alterungswert AW zunächst nur von der Betriebszeitdauer des Bandes abhängig.

Die Alterung beziehungsweise der Verschleiß eines Bandes 1, insbesondere eines Schubgliederbandes, hängt aber stark vom Fahrverhalten bzw. den Betriebsbedingungen, unter denen es betrieben worden ist, ab. Die verschiedenen Einflüsse werden über Wert Offset (Addition 1812) und einen Wichtungswert W (Multiplikation 1813 berücksichtigt.

In dem Block 1815 werden mit Hilfe einer Situationserkennung die tatsächliche Fahrsituation in Bezug auf den Verschleiß des Bandes 1 bewertet. Daraus werden die werte Offset und W abgeleitet. Die Situationserkennung kann beispielsweise die Fahrzeugdynamik berücksichtigen.

Zur Bildung der Werte Offset und W im Block 1815 werden diesem Block das aktuelle Motormoment Mₘₒₜ, die Getriebetemperatur T und die Primär- und Sekundärdrehzahl Nₚᵣᵢₘ und Nₛₑₖ zugeführt.

Bei der Bildung des Wichtungswertes W im Block 1815 werden beispielsweise durch die Getriebetemperatur T Temperatureinflüsse berücksichtigt. Beispielsweise geht ein Betriebszeitraum bei hoher Getriebe- und damit Bandtemperatur in die Integration 1814 stärker ein als ein Betriebszeitraum bei niedriger Getriebe- und damit Bandtemperatur

Der Wert Offset dient zur Berücksichtigung von abrupten Verschlechterungen bzw. Alterungen. Tritt beispielsweise ein Bandschlupf auf, der durch die Differenz zwischen Primär- und Sekundärdrehzahl Nₚᵣᵢₘ und Nₛₑₖ bei gleicher Übersetzung ermittelt werden kann, so kommt es zu einer lokalen Schädigung bzw. starken Alterung beziehungsweise starkem Verschleiß des Bandes 1.

Der am Ausgang der Integrationseinheit anliegende Alterungswert AW wird in dem nicht-flüchtigen Speicher 1815 (EEPROM) gespeichert und im Betrieb des Fahrzeugs dem Block 183 (Figur 8) zugeleitet. Die Speicherung 1815 ist deshalb vorteilhaft, damit, falls der Speicherwert AW verloren geht, nicht, wie bisher, auf eine ausreichende verschleißunabhängige Sicherheitsreserve geschaltet werden muß.

Im Block 183 wird dann abhängig von dem Alterungswert AW, beispielsweise mittels einer Kennlinie, ein Wert SR2 zur Sicherheitsreserve ermittelt. Bei der Bildung der unkorrigierten Bandspannung beziehungsweise des unkorrigierte Sekundäranpreßdrucks P_{sek,unk} im Block 181 (Figur 8) ist die Alterung beziehungsweise der Verschleiß des Bandes nicht berücksichtigt. Durch die Additionen 188 und 189 wird dann die lebensdauer- bzw verschleißabhängige Sicherheitsreserve SR2 zu dem unkorrigierten Wert addiert.

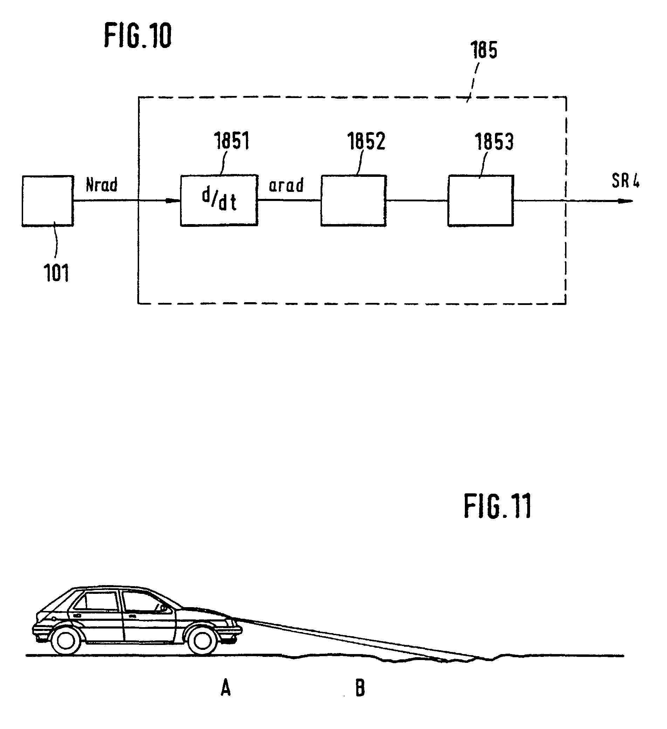

### 3. Ermittlung der Sicherheitsreserve abhängig von der Fahrzeugdynamik (Block 185/Figuren 8 und 10):

Um bei der Einstellung des Bandanpreßdruckes ein Optimum zwischen minimalen Druckverlusten einerseits und dem zu vermeidenden Bandschlupf andererseits zu finden, soll in diesem Teil des Ausführungsbeispiels der zur Schlupfvermeidung notwendige Anpreßdruck abhängig von der Fahrdynamik des Fahrzeugs beeinflußt werden. Hintergrund dafür ist, dass Fahrbedingungen wie beispielsweise ein starkes Beschleunigen, Verzögern oder Schleudern des Fahrzeugs abrupte, abtriebsseitige (am Getriebeausgang bewirkte) Drehmomentänderungen beziehungsweise Drehmomenteinkopplungen am Getriebe verursachen können. Informationen über solche Fahrbedingungen liegen im allgemeinen in den entsprechenden Steuergeräten (101, Figur 2) beziehungsweise Steuergerätteilen vor. Hierbei ist insbesondere an bekannte Antiblockier- (ABS), Antriebsschlupf- (ASR) und/oder Fahrstabiliätssysteme (FDR, ESP) gedacht, die durch Brems- und/der Vortriebseingriffe die Fahrstabilität erhöhen.

Mögliche Ursachen für die Drehmomenteinkopplungen über den Getriebeabtrieb sind:
- Durchdrehende Reifen im Antriebsschlupfregelbetrieb.
- Blockierbremsung bzw. starkes Bremsen im Antiblockierregelbetrieb.
- Fahrdynamikeingriffe, beispielsweise fahrerunabhängige und radindividuelle Bremseingriffe, um eine Schleudern des Fahrzeuges zu verhindern.
- Überfahren einer Schlechtwegstrecke.

In den oben genannten Steuergeräten (101, Figur 2) werden die Fälle, in denen solche Drehmomenteinkopplungen vorkommen können im allgemeinen erkannt bzw. es liegen für die Erkennung entsprechende Signale vor. Diese Signale müssen an das Getriebesteuergerät 18 übertragen werden, um dort eine entsprechende Reaktion, wie die Erhöhung der Bandspannung um eine Wert SR3 oder SR4 (Blöcke 184, 185, Figur 8), einzuleiten.

Die Bandspannung P_{sek,unk} (Sollsekundärdruck) kann zum Bsp. abhängig von einem in dem Steuergerät 101 standardmäßig berechneten Bremsmoment M_{br} durch die sicherheitsreserve SR4 erhöht werden. Das heißt, dass bei einem erhöhten Bremsmoment M_{br} die Bandspannung beziehungsweise der Sekundärdruck in vorgegebene Maße erhöht wird. Dies ist in der Figur 8 schematisch mit dem Block 184 dargestellt. Diesem Block wird das Bremsmoment M_{br} zugeführt, wobei mittels einer Kennlinie die Sicherheitsreserve SR3 ermittelt wird. Das Bremsmoment M_{br} kann beispielsweise über eine Datenleitung 23 (z.B. Controller Area Network, CAN) an das Getriebesteuergerät 18 übermittelt werden.

Das Bremsmoment M_{br} wird im Steuergerät 101 im allgemeinen abhängig von
- abhängig von dem gemessenen Bremsdruck des Bremspedals (fahrerabhängige Bremseingriffe) und
- abhängig von dem einem geschätzten Bremsmoment bei fahrerunabhängigen Bremseingriffen (ohne Bremspedalbetätigung)
berechnet.

Das Signal M_{br} hat den Vorteil, dass es sehr frühzeitig einen bevorstehenden Bremseneingriff anzeigt. Das heißt, dass das Signal M_{br} schon vor dem eigentlichen Bremseingriff (im allgemeinen Anstieg des Bremshydraulikdrucks im Bremssystem) und vor der eigentlichen Verzögerung des Fahrzeugs den Bremseingriff und damit mögliche Momentensprünge am Getriebeausgang anzeigt. Die Bandspannung kann somit rechtzeitig erhöht werden, bevor Drehmomentschwankungen über den Antriebsstrang eingekoppelt werden.

Weiterhin kann unterschieden werden, an welcher Achse oder an welchen Rad das Bremsmoment M_{br} auftritt. Da die für das Band kritischen Drehmomenteinkopplungen nur an der Antriebsachse auftreten, müssen auch nur die Bremseingriffe an der Antriebsachse bei der Bandspannung berücksichtigt werden.

In einer sehr einfachen Ausgestaltung kann vorgesehen sein, dass bei einem Bremseingriff durch das Steuergerät 101 der Anpreßdruck Psek,unk um den fest vorgegebenen Sicherheitswert SR3 erhöht wird.

Im Antriebsstrang sind im allgemeinen Kupplungen vorgesehen. Es kann vorgesehen sein, dass bei einem Bremseingriff zur Vermeidung eines Blockierens der Räder (ABS-Eingriff) oder auch allgemein bei starken Bremsvorgängen ein vollständiges oder teilweises Öffnen der Kupplung oder Kupplungen vorgesehen ist. Dadurch kann das vom Band zu übertragende Drehmoment begrenzt werden. Weiterhin sollte eine vorhandene Kupplung zur Überbrückung des Wandlers 12 (siehe Figur 1) geöffnet werden. In einer speziellen Ausführungsform kann das Öffnen der Kupplungen nur für einen bestimmten Zeitraum vorgesehen sein bis die Wandlerkupplung geöffnet ist. Nach dem Öffnen der Kupplung oder Kupplungen muß das Wiederschließen (gesteuert oder geregelt) derart erfolgen, dass möglichst kein Stoß im Antriebsstrang auftritt.

Bei einem Bremseingriff zur Erhöhung der Fahrstabilität kann ein Öffnen der Kupplung hinderlich sein. Aus diesem Grund kann das Steuergerät 101 weiterhin ein (nicht dargestelltes) Signal zur Getriebesteuerung 18 übermitteln, das angibt, ob ein Öffnen der Kupplung erlaubt ist. Ebenso könnte das Steuergerät 101 ein (nicht dargestelltes) Signal zur Getriebesteuerung 18 leiten, das angibt, ob es sich um einen Eingriff zur Vermeidung eines Radblockierens (ABS-Eingriff) oder um einen Eingriff zur Vermeidung eines zu hohen Antriebsschlupfes (ASR-Eingriff) oder um eine Fahrstabilitätseingriff (ESP-Eingriff) handelt.

Die Figur 10 zeigt die nähere Ausgestaltung des Blocks 185 der Figur 8. Diese Ausführungsform betrifft das Erkennung von durchdrehenden Rädern bzw. das Erkennen einer Schlechtwegstrecke.

Im Bremssteuergerät 101 stehen die Raddrehzahlen N_{rad} aller Fahrzeugräder zur Verfügung. Im folgenden soll beispielhaft das Signal eines Rades betrachtet werden. Das Signal N_{rad} wird zu dem Block 185 der Getriebesteuerung 18 übertragen.

Durch die Auswertung der Raddrehzahlen beziehungsweise der Radbeschleunigungen kann ein Durchdrehen der Räder erkannt werden, das zu Momentensprüngen im Antriebsstrang führen kann. Hierzu wird zunächst durch Differenzieren im Block 1851 die Radbeschleunigung a_{rad} ermittelt. Die Radbeschleunigung kann selbstverständlich der Getriebesteuerung 18 auch direkt von der Bremssteuerung 101 zugeführt werden. Im Block 1852 wird der Betrag der Radbeschleunigung gebildet, wobei auch eine Filterung, beispielsweise durch ein PT₁-Glied vorgesehen sein kann. Im Block 1853 wird dann, beispielsweise über ein Kennfeld, die Sicherheitsreserve SR4 abhängig von dem gefilterten Betrag der Radbeschleunigung bestimmt.

Auch beim Überfahren einer Schlechtwegstrecke ergeben sich starke Änderungen der Raddrehzahlen, was durch eine Auswertung der Radbeschleunigung erkannt werden kann. Der Wert SR4 berücksichtigt also auch eine unebene Fahrbahn.

Zur Erkennung einer Schlechtwegstrecke können ebenso weitere Sensorsignale herangezogen werden. So zum Beispiel die Signale eines Beschleunigungssensors, der die Karosseriebeschleunigung mißt.

Zu weiteren Ausführungsformen soll auf folgendes hingewiesen werden:
- Es können natürlich auch entsprechende bitcodierte Signale per CAN an die Getriebesteuerung 18 übertragen werden (beispielsweise die Signale "Bremse betätigt" bzw. "Bremslichtschalter ausgelöst", "ESP-Eingriff aktiv", "ABS-Eingriff an mindestens einem Antriebsrad aktiv", "Anforderung für Öffnen der Wandlerkuplung", "Schlechtwegstrecke erkannt" usw.).
- Bei einem hohen Bremsmoment M_{br} kann zusätzlich die Wandlerkupplung oder die Vorwärtskupplung (siehe Figur 1) geöffnet werden. Das CVT-Getriebe 2 besitzt hier die Möglichkeit, den Abtrieb mittels einer Vorwärtskupplung zumindest kurzzeitig (solange bis die Wandlerkupplung geschlossen ist) abzukoppeln. Hier kann von dem Steuergerät 101 eine Anforderung für ein Öffnen der Wandlerkupplung gesendet wird.

Die Sicherheitsreserve SR 4 kann auch von der Gierrate ω' und/oder von der Querbeschleunigung aq des Fahrzeugs abhängig sein, da auch eine hohe Gierrate und/oder eine hoher Querbeschleunigungswert auf mögliche Momentsprünge im Antriebsstrang schließen läßt.

### 4. Ermittlung der Sicherheitsreserve abhängig von einer Abstandsregelung (Block 187/Figur 8):

Wie schon eingangs erwähnt sind aus dem Stand der Technik Abstandsregelsysteme 102 bekannt, die den Abstand eines Fahrzeugs zu einem vorausfahrenden Fahrzeugs erfassen. Wird der Abstand zu gering, so sehen dieses Systeme fahrerunabhängige Eingriffe in die Fahrzeugbremsen vor. Auch durch solche Eingriffe können abrupte, abtriebsseitige (am Getriebeausgang wirkende) Drehmomentänderungen beziehungsweise Drehmomenteinkopplungen am Getriebe verursacht werden. Aus diesem Grund wird von dem Abstandsregelsysteme 102 erfindungsgemäß dann das Eingriffssignal ACC der Getriebesteuerung 18 zugeführt, wenn ein solcher Bremseingriff vorliegt. Im Block 187 (Figur 8) wird daraufhin der Anpreßdruck P_{sek, unk} um den Sicherheitswert SR6 erhöht.

### 5. Ermittlung der Sicherheitsreserve abhängig von Fahrbahnunebenheit (Block 186/Figur 8):

Die im vorangehenden Abschnitt erwähnten Abstandsregelsysteme 102 erfassen den Abstand zu dem vorausfahrenden Fahrzeug durch Radarsensoren, die im vorderen Fahrzeugbereich angebracht sind und eine Reichweite von ca. 150 Meter (Abstand A zu B in der Figur 11) aufweisen. Die Ausgangssignale dieser Radarsensoren können auch zur Ermittlung der Fahrbahnoberflächenstruktur beziehungsweise Fahrbahnbeschaffenheit der vor dem Fahrzeug liegenden Fahrbahn benutzt werden. Ein entsprechendes Signal FB wird dann in der Einheit 102 gebildet und der Getriebesteuerung 18 zugeführt. Eine Prinzipskizze hierzu zeigt die Figur 11.

Das Signal FB repräsentiert somit die Beschaffenheit der Fahrbahn, die von dem Fahrzeug in nächster Zukunft befahren werden wird. Durch das Signal FB erhält die Getriebesteuerung 18 sehr frühzeitig eine Information darüber, ob getriebeabtriebsseitig mit Drehmomentsprüngen aufgrund eines unebenen Fahrweges (Schlechtweg) zu rechnen ist. Ist dies der Fall, so wird im Block 186, der im einfachsten Fall das die Oberflächenerhebungen repräsentierende Signal FB mit einem Schwellwert vergleicht, eine entsprechende Sicherheitsreserve SR 5 ermittelt.

In den bisherigen Abschnitten wurde der Einfluß einer Schlechtwegstrecke durch die Auswertung der Motordrehzahl oder der Radbeschleunigung berücksichtigt. Durch das Signal FB kann sehr viel wirksamer, da frühzeitiger, einer Schädigung des Bandes 1 durch Erhöhung des Anpreßdrucks entgegengewirkt werden.

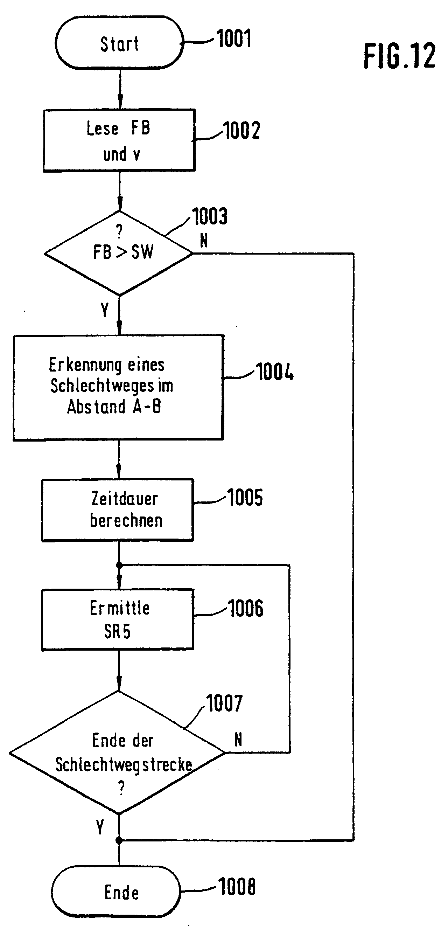

Die Figur 12 stellt eine Ablauf dar, wie er im Block 186 ablaufen könnte.

Nach dem Startschritt 1001 wird im Schritt 1002 der Fahrbahnwert FB und die Fahrzeuglängsgeschwindigkeit V (beispielsweise aus den Raddrehzahlen im Bremssteuergerät 101 ermittelt) eingelesen. Im Schritt 1003 wird der Fahrbahnwert FB, der die Fahrbahnunebenheit repräsentiert, mit dem Schwellenwert SW verglichen. Übersteigt FB den Wert SW, so liegt eine Schlechtwegstrecke im Abstand A-B vor (Schritt 1004). Liegt keine Schlechtwegstrecke vor, so wird zum Endschritt 1008 übergegangen.

Wird im Schritt 1004 eine zu befahrende Schlechtwegstrecke erkannt, so wird im Schritt 1005 aus dem Abstand A-B und der Fahrzeuggeschwindigkeit V die Zeitdauer bis zum Erreichen der Schlechtwegabschnitts ermittelt. Im Schritt 1006 wird dann der Sicherheitswert SR5 derart ermittelt, dass der Anpreßdruck in ausreichendem Maße erhöht wird, wenn das Fahrzeugs den Schlechtwegabschnitt erreicht. Es kann auch vorgesehen sein, dass SR5 eine festen Wert annimmt.

Wird im Schritt 1007 aus dem Signal FB das Ende des Schlechtwegabschnitts erfaßt, so wird zum Endschritt 1008 übergegangen.

Vorteilhafterweise kann im Schritt 1006 auch die Wandlerüberbrückungskupplung dann teilweise oder vollständig geöffnet werden, wenn ein Schlechtwegabschnitt befahren wird. Auch dies führt zu einer Verminderung von Momentensprüngen im Antriebsstrang.

Es bleibt durch das frühzeitige Erkennen eines Schlechtwegabschnitts genügend Zeit, die Wandlerüberbrückungskupplung zu öffnen.

## Patentansprüche

1. System zur Einstellung der Spannung des Umschlingungsteils (1) eines, vorzugsweise in seiner Übersetzung stufenlos verstellbaren, einem Fahrzeugmotor (11) nachgelagerten Umschlingungsgetriebes, mit ersten Mitteln (22) zur Steuerung bzw. Regelung des Fahrzeugmotors (11) und zweiten Mitteln (18) zur Steuerung bzw. Regelung des Umschlingungsgetriebes, wobei durch die ersten Mittel (22) ein erstes, das Motormoment des Fahrzeugmotors repräsentierendes Signal (Mₘₒₜ) ermittelt wird und das erste Signal (Mₘₒₜ) von den ersten Mitteln den zweiten Mitteln zugeführt wird, und durch die zweiten Mittel die Spannung abhängig von dem ersten Signal und einer Sicherheitsreserve (SR) eingestellt wird, **dadurch gekennzeichnet,**
- **dass** durch die ersten Mittel (22) ein zweites Signal (ΔMₘₒₜ), das die Güte des ersten Signals repräsentiert, ermittelt wird und das zweite Signal (ΔMₘₒₜ) von den ersten Mitteln (22) den zweiten Mitteln (18) zugeführt wird und die Sicherheitsreserve (SR) abhängig von dem zweiten Signal ermittelt wird, und/oder
- **dass** Mittel (181) vorgesehen sind, mittels der ein den Verschleiß und/oder die Alterung des Umschlingungsteils repräsentierender Alterungswert (AW) ermittelt wird, und die Sicherheitsreserve (SR) abhängig von dem Alterungswert (AW) ermittelt wird, und/oder
- **dass** dritte Mittel (101) vorgesehen sind, mittels der ein drittes Signal (M_{br}, ω', aq), das die an den Fahrzeugrädern einzustellende Bremswirkung und/oder die Gier- und/oder Querbewegung des Fahrzeugs repräsentiert, ermittelt wird, und das dritte Signal (M_{br}, ω', aq) von den dritten Mitteln den zweiten Mitteln (18) zugeführt wird und die Sicherheitsreserve (SR) abhängig von dem dritten Signal ermittelt wird, und/oder
- **dass** den zweiten Mitteln (18) ein die Drehzahl oder die Änderung der Drehzahl wenigstens eines Fahrzeugrades repräsentierendes viertes Signal (N_{rad}, a_{rad}) zugeführt wird und die Sicherheitsreserve (SR) abhängig von dem vierten Signal ermittelt wird, und/oder
- **dass** vierte Mittel (102) zur Abstandsregelung vorgesehen sind, die abhängig von dem erfaßten Abstand zu einem vorausfahrenden Fahrzeug ein Eingriffssignal (ACC), durch die ein Eingriff in die Bremsanlage des Fahrzeugs veranlaßt oder vorbereitet wird, ermitteln, und die Sicherheitsreserve (SR) abhängig von dem Eingriffssignal (ACC) ermittelt wird, und/oder
- **dass** fünfte Mittel (102) vorgesehen sind, die wenigstens mittels eines Sensors, insbesondere mittels seines Radarsensors, einen Fahrbahnwert (FB), der die Fahrbahnunebenheit der von dem Fahrzeug zu befahrenen Fahrbahn repräsentiert, ermitteln, und die Sicherheitsreserve (SR) abhängig von dem Fahrbahnwert (FB) ermittelt wird.

2. System nach Anspruch 1, **dadurch gekennzeichnet, dass** das zweite Signal (ΔMₘₒₜ) als Güte eine zumindest mögliche Schwankung des ersten Signals repräsentiert.

3. System nach Anspruch 1, **dadurch gekennzeichnet, dass** das zweite Signal (ΔMₘₒₜ) abhängig von den Toleranzen (ΔTol) wenigstens eines Sensors (24, 32, 33), dessen Ausgangssignal (Q₁, 123, 126) zur Steuerung bzw. Regelung des Fahrzeugmotors (11) ausgewertet wird, ermittelt wird, wobei insbesondere vorgesehen ist, dass
- der Sensor (24) zur direkten oder indirekten Erfassung der dem Fahrzeugmotor (11) zugeführten Luftmasse,
- der Sensor (33) zur Erfassung einer zur Steuerung bzw. Regelung des Fahrzeugmotors ausgewerteten Temperatur, und/oder
- der Sensor (32) zur Erfassung von Eigenschaften des Abgases des Fahrzeugmotors, dessen Ausgangssignale insbesondere zur Erfassung des dem Fahrzeugmotor zugeführten Kraftstoff-Luft-Gemischs herangezogen werden,
dient.

4. System nach Anspruch 1, **dadurch gekennzeichnet, dass** das zweite Signal (ΔMₘₒₜ) abhängig von einer erkannten Fehlfunktion im Betrieb des Fahrzeugmotors (11) ermittelt wird, wobei insbesondere vorgesehen ist, dass eine Fehlfunktion (ΔFF) dann erkannt wird, wenn
- Verbrennungsaussetzer in einem oder mehreren der Zylinder des Fahrzeugmotors (11), insbesondere durch Auswertung der erfaßten Motordrehzahl (Nₘₒₜ), erfaßt werden und/oder
- eine Fehlfunktion eines Sensors, dessen Ausgangssignal zur Steuerung bzw. Regelung des Fahrzeugmotors (11) ausgewertet wird, erkannt wird und/oder
- ein, insbesondere elektrischer, Notlauf der ersten Mittel (22) vorliegt und/oder
- die Kraftstoffzufuhr zu einzelnen Zylinder des Fahrzeugmotors (11) in Reaktion auf einen erkannten Fehler unterbrochen wird.

5. System nach Anspruch 1, **dadurch gekennzeichnet, dass** das zweite Signal (ΔMₘₒₜ) abhängig von der erfaßten Laufunruhe des Fahrzeugmotors (11) ermittelt wird, wobei insbesondere vorgesehen ist, dass die Erfassung der Laufunruhe (ΔLU) davon abhängig ist, ob
- mechanische Schwingungen, insbesondere Torsionsschwingungen, im Antriebsstrang des Fahrzeugs vorliegen, und/oder
- die Kraftstoffzufuhr zu einzelnen Zylinder des Fahrzeugmotors unterbrochen wird und/oder
- die ersten Mittel (22) den Fahrzeugmotor (11) derart steuern beziehungsweise regeln, dass Schwingungen im Antriebsstrang entgegengewirkt wird (Antiruckelfunktion, Lastschlagdämpfung), und/oder
- eine Umschaltung zwischen verschiedenen Betriebsarten des Fahrzeugmotors stattfindet und/oder
- erkannt wird, dass eine vorgebbare Fahrbahnqualität vorliegt (Schlechtwegerkennung), und/oder
- der Kraftstofftank fast leer ist.

6. System nach Anspruch 5, **dadurch gekennzeichnet, dass** das zweite Signal (ΔMₘₒₜ) abhängig von gespeicherten Adaptionswerten, die die Laufunruhe des Fahrzeugmotors repräsentieren, ermittelt wird, wobei insbesondere vorgesehen ist, dass die Adaptionswerten last- und/oder drehzahlabhängig gespeichert sind.

7. System nach Anspruch 1, **dadurch gekennzeichnet, dass** das zweite Signal (ΔMₘₒₜ) abhängig von Ungenauigkeiten, die bei der Ermittlung des ersten Signals auftreten, ermittelt wird, wobei insbesondere vorgesehen ist,
- dass das zweite Signal (ΔMₘₒₜ) abhängig von der Drehzahl des Fahrzeugmotors ermittelt werden, und/oder
- dass durch die ersten Mittel (22) eine Adaption der Reibbeziehungsweise Verlustmomente, insbesondere im Leerlauf des Fahrzeugmotors, getätigt wird und das zweite Signal (ΔMₘₒₜ) abhängig davon ermittelt wird, ob die Adaption abgeschlossen ist oder nicht.

8. System nach Anspruch 1, **dadurch gekennzeichnet, dass** der Alterungswert (AW) abhängig von der Betriebsdauer des Umschlingungsteils (1) ermittelt wird, wobei insbesondere vorgesehen ist, dass der Alterungswert (AW) weiterhin abhängig von den während der Betriebsdauer vorliegenden Betriebsbedingungen wie Fahrverhalten des Fahrers, Betriebstemperatur und/oder Schlupf des Umschlingungsteils (1) ermittelt wird.

9. System nach Anspruch 1, **dadurch gekennzeichnet, dass** der Alterungswert (AW) in den zweiten Mitteln (18) ermittelt wird und dort nicht-flüchtig gespeichert wird.

10. System nach Anspruch 1, **dadurch gekennzeichnet, dass** das vierte Signal (N_{rad}, a_{rad}) den zweiten Mitteln (18) von den dritten Mitteln (101) zugeführt wird und die dritten Mittel (101) als ein Antiblockierregelsystem und/oder ein Antriebsschlupfregelsystem und/oder ein Fahrstabilitätsregelsystem ausgebildet sind, mittels dem ein an den Fahrzeugrädern wirkendes Bremsmoment zur Erhöhung der Fahrstabilität eingestellt werden kann.

11. System nach Anspruch 1, **dadurch gekennzeichnet, dass** im Antriebsstrang des Fahrzeugs wenigstens eine Kupplung, insbesondere eine Wandlerüberbrückungskupplung, durch die ein im Antriebsstrang vorgesehener Drehmomentenwandler überbrückt werden kann, vorgesehen ist und die Kupplung abhängig von dem Fahrbahnwert (FB) und von erkannten Fehlerfällen, insbesondere Verbrennungsaussetzern, geöffnet wird.

12. System nach Anspruch 1, **dadurch gekennzeichnet, dass** die Sicherheitsreserve (SR) derart ermittelt wird,
- dass die Spannung des Umschlingungsteils (1) bei Vorliegen einer geringeren Güte des ersten Signals (Mₘₒₜ) gegenüber der Einstellung der Spannung bei Vorliegen einer höheren Güte des ersten Signals erhöht wird, und/oder
- dass die Spannung des Umschlingungsteils (1) bei Vorliegen eines höheren Verschleißes und/oder einer Alterung größeren Ausmaßes gegenüber der Einstellung der Spannung bei Vorliegen eines niedrigeren Verschleißes und/oder einer Alterung geringeren Ausmaßes erhöht wird, und/oder
- dass die Spannung des Umschlingungsteils (1) bei Vorliegen einer Bremswirkung und/oder einer Gier- und/oder Querbewegung größeren Ausmaßes gegenüber der Einstellung der Spannung bei Vorliegen einer Bremswirkung und/oder einer Gier- und/oder Querbewegung geringeren Ausmaßes erhöht wird, und/oder
- dass die Spannung des Umschlingungsteils (1) bei Vorliegen einer größeren Drehzahl oder die größeren Änderung der Drehzahl wenigstens eines Fahrzeugrades gegenüber der Einstellung der Spannung bei Vorliegen einer kleineren Drehzahl oder die kleineren Änderung der Drehzahl erhöht wird, und/oder
- dass die Spannung des Umschlingungsteils (1) bei Vorliegen eines durch die vierten Mittel (102) veranlaßten Bremseingriffs erhöht wird, und/oder
- dass die Spannung des Umschlingungsteils (1) bei Vorliegen einer Fahrbahnunebenheit größeren Ausmaßes gegenüber der Einstellung der Spannung bei Vorliegen einer Fahrbahnunebenheit geringeren Ausmaßes erhöht wird.

13. System nach Anspruch 1, **dadurch gekennzeichnet, dass** ein von dem ersten Signal (Mₘₒₜ) abhängiger Spannungswert ermittelt wird, der abhängig von der Sicherheitsreserve (SR) modifiziert, insbesondere erhöht, wird, wobei insbesondere vorgesehen ist, dass die Einstellung der Spannung hydraulisch geschieht und die Spannung durch die Vorgabe wenigstens eines Druckwertes (P_{sek,kor}) eingestellt wird, und abhängig von dem ersten Signal (Mₘₒₜ) ein Druckwertes (P_{sek,unkor}) ermittelt wird, der abhängig von der Sicherheitsreserve (SR) modifiziert, insbesondere erhöht wird.

## Claims

1. System for setting the voltage of the wound part (1) of a flexible drive mechanism, which preferably has an infinitely adjustable transmission ratio and is mounted downstream of a vehicle engine (11), having first means (22) for controlling or regulating the vehicle engine (11) and second means (18) for controlling or regulating the flexible drive mechanism, the first means (22) determining a first signal (Mₘₒₜ) which represents the engine torque of the vehicle engine and the first means feeding the first signal (Mₘₒₜ) to the second means, and the second means setting the voltage as a function of the first signal and a safety margin (SR), **characterized**
- **in that** the first means (22) determine a second signal (ΔMₘₒₜ) which represents the quality of the first signal, and the first means (22) feed the second signal (ΔMₘₒₜ) to the second means (18) and the safety margin (SR) is determined as a function of the second signal, and/or
- **in that** means (181) are provided which determine an ageing value (AW) which represents the wear and/or the ageing of the wound part, and the safety margin (SR) is determined as a function of the ageing value (AW), and/or
- **in that** third means (101) are provided which determine a third signal (M_{br}, ω', aq) which represents the braking effect to be set at the vehicle wheels and/or the yawing movement and/or lateral movement of the vehicle, and the third means feed the third signal (M_{br}, ω', aq) to the second means (18) and the safety margin (SR) is determined as a function of the third signal, and/or
- **in that** a fourth signal (N_{rad}, a_{rad}) which represents the rotational speed or the change in the rotational speed of at least one vehicle wheel is fed to the second means (18) and the safety margin (SR) is determined as a function of the fourth signal, and/or
- **in that** fourth means (102) are provided for distance control, which means determine, as a function of the sensed distance to a vehicle travelling ahead, an intervention signal (ACC) by means of which an intervention in the brake system of the vehicle is brought about or prepared, and the safety margin (SR) is determined as a function of the intervention signal (ACC), and/or
- **in that** fifth means (102) are provided which determine, at least by means of a sensor, in particular by means of its radar sensor, an underlying surface value (FB), which represents the unevenness of the underlying surface on which the vehicle is to travel, and the safety margin (SR) is determined as a function of the underlying surface value (FB).

2. System according to Claim 1, **characterized in that** the second signal (ΔMₘₒₜ) represents, as quality, an at least possible fluctuation in the first signal.

3. System according to Claim 1, **characterized in that** the second signal (ΔMₘₒₜ) is determined as a function of the tolerances (ΔTol) of at least one sensor (24, 32, 33) whose output signal (Q₁, 123, 126) is evaluated in order to control or regulate the vehicle engine (11), there being in particular provision that
- the sensor (24) is used for directly or indirectly registering the air mass fed to the vehicle engine (11),
- the sensor (33) is used for registering a temperature which is evaluated in order to control or regulate the vehicle engine, and/or
- the sensor (32) is used to register properties of the exhaust gas of the vehicle engine whose output signals are used in particular to register the fuel/air mixture fed to the vehicle engine.

4. System according to Claim 1, **characterized in that** the second signal (ΔMₘₒₜ) is determined as a function of a detected malfunction in the operation of the vehicle engine (11), there being in particular provision that a malfunction (ΔFF) is detected if
- combustion misfires in one or more of the cylinders of the vehicle engine (11) are registered, in particular by evaluating the registered engine speed (Nₘₒₜ), and/or
- a malfunction in a sensor whose output signal is evaluated in order to control or regulate the vehicle engine (11) is detected, and/or
- an emergency operating mode, in particular electrical, of the first means (22) is occurring, and/or
- the fuel supply to individual cylinders of the vehicle engine (11) is interrupted in reaction to a detected fault.

5. System according to Claim 1, **characterized in that** the second signal (ΔMₘₒₜ) is determined as a function of the registered uneven running of the vehicle engine (11), there being in particular provision that the registering of the uneven running (ΔLU) is dependent on whether
- mechanical vibrations, in particular torsional vibrations, are occurring in the drive train of the vehicle, and/or
- the fuel supply to individual cylinders of the vehicle engine is interrupted, and/or
- the first means (22) control or regulate the vehicle engine (11) in such a way that vibrations in the drive train are counteracted (anti-jolting function, load shift-damping), and/or
- switching over takes place between various modes of operation of the vehicle engine, and/or
- it is detected that a predefinable quality of the underlying surface is present (detection of a poor-quality road), and/or
- the fuel tank is almost empty.

6. System according to Claim 5, **characterized in that** the second signal (ΔMₘₒₜ) is determined as a function of stored adaptation values which represent the uneven running of the vehicle engine, there being in particular provision that the adaptation values are stored as a function of the load and/or rotational speed.

7. System according to Claim 1, **characterized in that** the second signal (ΔMₘₒₜ) is determined as a function of inaccuracies which occur during the determination of the first signal, there being in particular provision
- that the second signal (ΔMₘₒₜ) is determined as a function of the rotational speed of the vehicle engine, and/or
- that the first means (22) activate an adaptation of the friction torques or loss torques, in particular when the vehicle engine is idling, and the second signal (ΔMₘₒₜ) is determined as a function of whether or not the adaptation is terminated.

8. System according to Claim 1, **characterized in that** the ageing value (AW) is determined as a function of the operating period of the wound part (1), there being in particular provision that the ageing value (AW) continues to be determined as a function of the operating conditions present during the operating period, such as the driving behaviour of the driver, the operating temperature and/or slip of the wound part (1).

9. System according to Claim 1, **characterized in that** the ageing value (AW) is determined in the second means (18) and stored there in a non-volatile fashion.

10. System according to Claim 1, **characterized in that** the fourth signal (N_{rad}, a_{rad}) is fed to the second means (18) by the third means (101), and the third means (101) are embodied as an anti-lock braking control system and/or traction control system and/or a driving stability control system by means of which a braking torque which acts on the vehicle wheels can be set in order to increase the driving stability.

11. System according to Claim 1, **characterized in that** at least one clutch, in particular a converter lock-up clutch by means of which a torque converter provided in the drive train can be bypassed, is provided in the drive train of the vehicle and the clutch is opened as a function of the underlying surface value (FB) and of detected fault situations, in particular combustion misfires.

12. System according to Claim 1, **characterized in that** the safety margin (SR) is determined in such a way
- that the voltage of the wound part (1) is increased when there is a relatively low quality of the first signal (ΔMₘₒₜ) in comparison with the setting of the voltage when there is a relatively high quality of the first signal, and/or
- that the voltage of the wound part (1) is increased when there is a relatively high degree of wear and/or ageing of a relatively large degree in comparison with the setting of the voltage when there is a relatively low degree of wear and/or ageing of a relatively low degree, and/or
- that the voltage of the wound part (1) is increased when there is a braking effect and/or a yawing movement and/or lateral movement of a relatively large degree in comparison with the setting of the voltage when there is a braking effect and/or a yawing movement and/or lateral movement of a relatively low degree, and/or
- that the voltage of the wound part (1) is increased when there is a relatively high rotational speed or a relatively large change in the rotational speed of at least one vehicle wheel in comparison with the setting of the voltage when there is a relatively low rotational speed or a relatively small change in the rotational speed, and/or
- that the voltage of the wound part (1) is increased when there is a braking intervention which is brought about by the fourth means (102), and/or
- that the voltage of the wound part (1) is increased when there is an unevenness in the underlying surface of a relatively large degree in comparison with the setting of the voltage when there is an unevenness in the underlying surface of a relatively small degree.

13. System according to Claim 1, **characterized in that** a voltage value which is dependent on the first signal (Mₘₒₜ) is determined and, as a function of the safety margin (SR), is modified, in particular increased, there being in particular provision that the setting of the voltage is carried out hydraulically and the voltage is set by predefining at least one pressure value (P_{sek,kor}), and a pressure value (P_{sek,unkor}), which is modified, in particular increased, as a function of the safety margin (SR), is determined as a function of the first signal (Mₘₒₜ).

## Revendications

1. Système de réglage de la tension de la courroie (1) d'un variateur de préférence continu, en aval d'un moteur (11) d'un véhicule, comportant les premiers moyens (22) pour commander ou réguler le moteur (11) ainsi que des seconds moyens (18) pour commander ou réguler le variateur à courroie, selon lequel, à l'aide des premiers moyens (22) on détermine un premier signal (Mₘₒₜ) représentant le couple moteur fourni par le moteur du véhicule et on applique ce premier signal (Mₘₒₜ) par les premiers moyens à des seconds moyens et les seconds moyens règlent la tension en fonction du premier signal et d'une réserve de sécurité (SR),
**caractérisé en ce que**
- les premiers moyens (22) déterminent un second signal (ΔMₘₒₜ) représentant la qualité du premier signal et le second signal (ΔMₘₒₜ) est appliqué par les premiers moyens (22) aux seconds moyens (18) et on détermine la réserve de sécurité (SR) en fonction du second signal et/ou
- des moyens (181) sont prévus pour déterminer une valeur de vieillissement (AW) représentant l'usure et/ou le vieillissement de la courroie et on détermine la réserve de sécurité SR en fonction de la valeur de vieillissement (AW), et/ou
- des troisièmes moyens (101) à l'aide desquels on détermine un troisième signal (M_{br}, ω', aq) représentant l'effet de freinage à régler sur les roues du véhicule et/ou le mouvement de lacet et/ou le mouvement transversal du véhicule et ce troisième signal (M_{br}, ω', aq) est appliqué par les troisièmes moyens aux seconds moyens (18) et on détermine la réserve de sécurité (SR) en fonction du troisième signal et/ou
- les seconds moyens (18) reçoivent un quatrième signal (Nᵣₒᵤₑ, aᵣₒᵤₑ) représentant la vitesse de rotation ou la variation de la vitesse de rotation d'au moins une roue du véhicule et on détermine la réserve de sécurité (SR) en fonction du quatrième signal et/ou
- des quatrièmes moyens (102) assurent une régulation de distance en préparant ou en commandant en fonction de la distance saisie par rapport à un véhicule qui précède, un signal d'action (ACC) qui commande une action dans la station de freinage du véhicule et on détermine la réserve de sécurité (SR) en fonction du signal d'action (ACC) et/ou
- des cinquièmes moyens (102) qui déterminent avec au moins un capteur en particulier à l'aide d'un capteur radar, une caractéristique de chaussée (FB) représentant les irrégularités de la chaussée parcourue par le véhicule et on détermine la réserve de sécurité (SR) en fonction de cette caractéristique (FB) de la chaussée.

2. Système selon la revendication 1,
**caractérisé en ce que**
le second signal (ΔMₘₒₜ) représente la qualité d'au moins une variation possible du premier signal.

3. Système selon la revendication 1,
**caractérisé en ce que**
le second signal (ΔMₘₒₜ) se détermine en fonction des tolérances ΔTol d'au moins un capteur (24, 32, 33) dont le signal de sortie (Q1, 123, 126) est utilisé pour commander ou réguler le moteur (11) du véhicule et il est notamment prévu que
- le capteur (24) sert à la saisie directe ou indirecte de la masse d'air alimentant le moteur (11) ;
- le capteur (33) sert à la saisie d'une température exploitée pour commander ou réguler le moteur et/ou
- le capteur (32) sert à saisir les caractéristiques des gaz d'échappement du moteur, les signaux de sortie de ce capteur étant notamment utilisés pour déterminer le mélange carburant-air alimentant le moteur.

4. Système selon la revendication 1.
**caractérisé en ce que**
le second signal (ΔMₘₒₜ) se détermine suivant la défection d'un mauvais fonctionnement du moteur (11) et il est notamment prévu que l'on détecte un mauvais fonctionnement (ΔFF) si :
- on détecte des ratés de combustion dans un ou plusieurs cylindres du moteur (11) notamment par l'exploitation de la vitesse de rotation saisie (Mₘₒₜ) du moteur, et/ou si
- on détecte un mauvais fonctionnement dans le capteur dont le signal de sortie est exploité pour commander ou réguler le moteur (11) et/ou
- on est notamment en présence d'un fonctionnement secours électrique des premiers moyens (22), et/ou si
- on interrompt l'alimentation en carburant des différents cylindres du moteur (11) en réaction à la défection d'un défaut.

5. Système selon la revendication 1,
**caractérisé en ce que**
l'on détermine le second signal (ΔMₘₒₜ) en fonction de la régularité de fonctionnement saisie du moteur (11) et en particulier il est prévu que la saisie de la régularité de fonctionnement (ΔLU) se fait suivant que
- il y a des vibrations mécaniques en particulier des vibrations de torsion dans les lignes de transmission du véhicule, et/ou
- l'alimentation en carburant vers différents cylindres du moteur est interrompue, et/ou
- des premiers moyens (22) assurent la commande ou la régulation du moteur (11) pour agir contre les vibrations dans la ligne de transmission (fonction anti-secousse, amortissement des chocs de charge), et/ou
- on commute entre différents modes de fonctionnement du moteur, et/ou
- on détecte l'existence d'une qualité prédéterminée de la chaussée (détection d'une chaussée en mauvais état), et/ou
- le réservoir à carburant est pratiquement vide.

6. Système selon la revendication 5,
**caractérisé en ce qu'**
on détermine le second signal (ΔMₘₒₜ) en fonction des valeurs d'adaptation mises en mémoire et qui représentent la régularité de fonctionnement du moteur, et il est notamment prévu de mettre en mémoire les valeurs d'adaptation en fonction de la charge et/ou de la vitesse de rotation.

7. Système selon la revendication 1,
**caractérisé en ce qu'**,
on détermine le second signal (ΔMₘₒₜ) en fonction des imprécisions rencontrées lors de la détermination du premier signal, et il est notamment prévu que
- le second signal (ΔMₘₒₜ) se détermine en fonction de la vitesse de rotation du moteur, et/ou
- les premiers moyens (22) assurent une adaptation du couple de friction ou du couple perdu notamment lorsque le moteur tourne au ralenti et le second signal (ΔMₘₒₜ) est déterminé en fonction de ce que l'adaptation est terminée ou non.

8. Système selon la revendication 1,
**caractérisé en ce que**
la valeur de vieillissement (AW) se détermine suivant la durée de fonctionnement de la courroie (1) et en particulier il est prévu que la valeur de vieillissement AW dépend en outre des conditions de fonctionnement existantes pendant la durée de fonctionnement, comme le comportement de conduite du conducteur, la température de fonctionnement et/ou patinage de la courroie (1).

9. Système selon la revendication 1,
caractérisant en ce que
la valeur de vieillissement (AW) se détermine dans les seconds moyens (18) pour y être enregistrée dans une mémoire non volatile.

10. Système selon la revendication 1,
**caractérisé en ce que**
le quatrième signal (Nᵣₒᵤₑ, aᵣₒᵤₑ) est appliqué par les troisièmes moyens aux seconds moyens (101) et les troisièmes moyens (101) sont constitués par un système anti-blocage et/ou un système anti-patinage à l'entraînement et/ou un système de stabilisation du roulage à l'aide duquel on règle un couple de freinage agissant sur les roues du véhicule pour augmenter la stabilité de roulage.

11. Système selon la revendication 1,
**caractérisé en ce que**
la ligne de transmission du véhicule comporte au moins un embrayage et notamment un embrayage de coupure de convertisseur permettant de contourner le convertisseur de couple prévu dans la ligne de transmission, et l'embrayage est ouvert en fonction de la caractéristique de la chaussée (FB) et des situations de défaut détecté en particulier des ratés de combustion.

12. Système selon la revendication 1,
**caractérisé en ce qu'**
on détermine la réserve de sécurité (SR) **en ce que**
- la tension de la courroie (1) dans le cas d'une qualité faible du premier signal (Mₘₒₜ) est augmentée par rapport au réglage de la tension dans le cas d'une qualité plus élevée du premier signal, et/ou
- on augmente la tension de la courroie (1) dans le cas d'une usure plus élevée et/ou d'un vieillissement plus important, par rapport au réglage de la tension dans le cas d'une usure plus faible et/ou d'un vieillissement plus réduit, et/ou
- on augmente la tension de la courroie (1) dans le cas d'une action de frein et /ou d'un mouvement de lacet et/ou d'un mouvement transversal d'amplitude importante, par rapport au réglage de la tension dans le cas d'une action de freinage et/ou d'un mouvement de lacet et/ou d'un mouvement transversal de faible amplitude, et/ou
- on augmente la tension de la courroie (1) dans le cas d'une vitesse de rotation élevée ou d'une variation importante de la vitesse de rotation d'au moins une roue du véhicule, par rapport au réglage de la tension dans le cas d'une vitesse de rotation faible ou d'une variation faible de la vitesse de rotation, et/ou
- on augmente la tension de la courroie (1) dans le cas d'une action de freinage commandée par les quatrièmes moyens (102), et/ou
- on augmente la tension de la courroie (1) dans le cas d'une irrégularité de la chaussée importante, par rapport au réglage de la tension dans le cas d'une irrégularité faible de la chaussée.

13. Système selon la revendication 1.
**caractérisé en ce que**
on détermine une valeur de tension dépendant du premier signal (Mₘₒₜ), cette valeur étant modifiée en fonction de la réserve de sécurité (SR) et notamment augmentée, et en particulier il est prévu de régler la tension de manière hydraulique en prédéterminant au moins une valeur de pression (P_{Sec, cor}), et en fonction du premier signal (Mₘₒₜ) on détermine une valeur de pression (P_{Sec, uncor}), que l'on modifie et notamment que l'on augmente en fonction de la réserve de sécurité (SR).
